# EUROPÄISCHE PATENTSCHRIFT

(11) **EP 3 938 436 B1**
(45) Veröffentlichungstag und Bekanntmachung des Hinweises auf die Patenterteilung: **02.12.2026**
(21) Anmeldenummer: 20708522.6
(22) Anmeldetag: 12.03.2020
(51) Int. Cl.: C08K 5/3495, C08L 77/02

(54) **HOCHVOLTKOMPONENTEN**
HIGH VOLTAGE COMPONENTS
COMPOSANTS HAUT VOLTAGE

(30) Priorität: 15.03.2019 EP 19163035
(43) Veröffentlichungstag der Anmeldung: 19.01.2022
(73) Patentinhaber: Envalior Deutschland GmbH, 40474 Düsseldorf (DE)
(72) Erfinder: ENDTNER, Jochen, 40474 DÜSSELDORF (DE); SCHMITZ, Dirk, 40474 DÜSSELDORF (DE); BIENMÜLLER, Matthias, 40474 DÜSSELDORF (DE)
(74) Vertreter: Envalior Association
(86) Internationale Anmeldenummer: PCT/EP2020/056700
(87) Internationale Veröffentlichungsnummer: WO 2020/187702

(56) Entgegenhaltungen:
- EP-A1- 0 041 274
- EP-A2- 0 827 986
- WO-A1-2005/084955

## Beschreibung

Die vorliegende Erfindung betrifft orange Hochvoltkomponenten, insbesondere für die Elektromobilität, enthaltend orange Polymerzusammensetzungen auf Basis von wenigstens einem Polyamid und 10,10'-Oxybis-12H-phthaloperin-12-on, sowie die Verwendung von 10,10'-Oxybis-12H-phthaloperin-12-on zur Herstellung von orange Polyamid basierten Erzeugnissen mit der Maßgabe eines Farbabstands ΔE <20 von den L*a*b* Koordinaten einer mit "2" beginnenden Farbnummer der RAL-Farbtabelle sowie schließlich die Verwendung von 10,10'-Oxybis-12H-phthaloperin-12-on zur Markierung Polyamid basierter Erzeugnisse als Hochvoltkomponenten.

### Stand der Technik

Technische Thermoplaste wie Polyamide sind aufgrund ihrer guten mechanischen Stabilität, ihrer chemischen Beständigkeit, den sehr guten elektrischen Eigenschaften und der guten Verarbeitbarkeit, gerade auch im Bereich von Bauteilen für Kraftfahrzeuge, ein wichtiger Werkstoff.

Polyamide bilden seit vielen Jahren einen wichtigen Bestandteil zur Fertigung anspruchsvoller Kraftfahrzeugkomponenten. Während über viele Jahre der Verbrennungsmotor das dominierende Antriebskonzept darstellte, ergeben sich im Zuge der Suche nach alternativen Antriebskonzepten auch neue Anforderungen hinsichtlich der Materialauswahl. Eine wesentliche Rolle spielt dabei die Elektromobilität, bei welcher der Verbrennungsmotor teilweise (Hybrid-Fahrzeug [HEV, PHEV, BEV Rex]) oder vollständig (Elektromobil [BEV, FCEV]) durch einen oder mehrere Elektromotoren ersetzt wird, die ihre elektrische Energie typischerweise aus Batterien oder Brennstoffzellen beziehen. Während konventionelle Fahrzeuge mit Verbrennungsmotor als alleinigem Antrieb (ICE [Internal Combustion Engine]) typischerweise mit einem Bordspannungsnetz von 12V auskommen, werden in Hybrid- und Elektrofahrzeugen mit Elektromotoren als Antriebseinheit wesentlich höhere Spannungen benötigt. Dies stellt für den direkten Bereich und die unmittelbare Umgebung von derartig hochspannungsführenden Komponenten ein ernstzunehmendes zusätzliches Gefahrenpotential dar, was in technischen Spezifikationen oder auch normativ zunehmend eine Rolle spielt. Eine wichtige Rolle spielt dabei die eindeutige Kennzeichnung dieser Gefährdungsbereiche, um auf diese Weise einen unbeabsichtigten Kontakt mit einem Menschen, insbesondere Fahrer, Mechaniker, usw. zu vermeiden, wobei wiederum die eindeutige farbliche Kennzeichnung von derartigen Hochvoltbaugruppen eine besonders wichtige Rolle spielt.

So hat das Advanced Vehicle Team des Idaho National Laboratory für HEV (Hybrid Electric Vehical) in **https://avt.inl.gov/sites/default/files/pdf/hev/hevtechspecr1.pdf** eine technische Spezifikation veröffentlicht, die für alle Geräte, welche einer Hochspannung größer oder gleich 60V ausgesetzt sind, unter anderem eine klare Kennzeichnung als **HOCHVOLT** empfiehlt und in diesem Zusammenhang auch auf die Farbe **Orange** als Kennzeichnung hinweist.

Aufgrund der hohen Verarbeitungstemperaturen von teilweise > 300°C in der Compoundierung und im Spritzguss ist gerade für technische Thermoplaste die Auswahl an geeigneten Farbmitteln für die Farbe Orange jedoch sehr eingeschränkt.

WO 2005/084955 A1 offenbart laserschweißbare Zusammensetzungen unter anderem auf Basis von Polyamid enthaltend einen Farbstoff, wobei als Farbstoff beispielsweise Solvent Orange 60 eingesetzt werden kann.

EP 0 827 986 A2 betrifft verbrückte Perinone, Chinophthalone und Perinon-Chinophthalone, ein Verfahren zu ihrer Herstellung sowie ihre Verwendung zum Massefärben von Kunststoffen. Als bevorzugte Kunststoffe werden Polystyrol, Styrol-Mischpolymere, Polycarbonate und Polymethacrylat aufgeführt, besonders bevorzugt sind Polystyrol, Polyethylen und Polypropylen. Beispiel 16 nennt explizit 10,10'-Oxy-bis-12H-phthaloperin-12-on.

EP 0 041 274 B1 beschreibt fluoreszierende Zusammensetzungen mit der Fähigkeit die Wellenlängen des Lichtes zu verändern, Formkörper auf Basis solcher Zusammensetzungen als Lichtwellen umwandelnde Elemente und Vorrichtungen zur Umwandlung von optischer Energie in elektrische Energie unter Verwendung eines solchen Elements. In den Beispielen der EP 0 041 274 B1 wird unter anderem 12H-Phthaloperin-12-on in Polyethylenterephthalat (PET) eingesetzt. Ferner wird in EP 0 041 274 B1 der Einsatz unter anderem in Polyamiden vorgeschlagen.

12H-Phthaloperin-12-on [CAS Nr. 6925-69-5], bekannt als Solvent Orange 60, ist beispielsweise erhältlich als Macrolex^{®} Orange 3G von der Firma Lanxess Deutschland GmbH, Köln. Nachteilig ist aber, dass Solvent Orange 60 bei Extremanforderungen, insbesondere unter den Anforderungen in der Elektromobilität, zu Migration aus der Kunststoffmatrix neigt, was bei erhöhten Temperaturen zu einem Nachlassen der Farbintensität führt. Das Solvent Orange 60 migriert dabei an die Oberfläche des Kunststoffes (blooming). Von dort kann es abgerieben, abgewaschen oder aufgelöst werden, sich verflüchtigen (fogging) oder in andere Werkstoffe (z.B. benachbarte Kunststoff- oder Kautschukteile) migrieren (bleeding). Die Konzentration des Solvent Orange 60 im ursprünglichen Kunststoff reduziert sich, was zum Nachlassen der Farbintensität führt. Das migrierte Solvent Orange 60 hat zudem den Nachteil, dass es durch mechanische oder physikalische Prozesse zu benachbarten Bauteilen transportiert werden kann und dort zu negativen Funktionsbeeinträchtigungen führt. Beispielsweise sei hier ein erhöhter elektrischer Widerstand in einem Schalterkontakt genannt, der durch Ablagerung von Solvent Orange 60 auf der Oberfläche von elektrischen Kontakten resultieren kann. Im Umfeld elektrischer Bauteile ist daher die Migration von Inhaltsstoffen aus Kunststoffen heraus generell unerwünscht, da sie die Eigenschaften der Kunststoffe sowie räumlich benachbarter Teile beeinflussen kann, wodurch die Funktion des elektrischen Bauteils ggf. nicht mehr gewährleistet ist.

Ausgehend von der Lehre der EP 0 041 274 B1 bestand die Aufgabe der vorliegenden Erfindung deshalb darin, orange Polymerzusammensetzungen auf Basis von Polyamid für Hochvoltkomponenten, insbesondere für Hochvoltkomponenten in Elektrofahrzeugen, bereitzustellen, die gegenüber der Lösung in EP 0 041 274 B1 auf Basis von 12H-Phthaloperin-12-on weniger anfällig für Migration, insbesondere Ausbluten (Bleeding) sind. Idealerweise sollen erfindungsgemäße orange Polyamid basierte Hochvoltkomponenten gegenüber Erzeugnissen auf Basis des oben zitierten Stands der Technik eine verbesserte Lichtechtheit (Lightfastness) aufweisen, indem die ursprüngliche, unmittelbar nach dem Spritzguss erzielte Farbe, unter UV-Licht über einen längeren Zeitraum als im Vergleich zu 12H-Phthaloperin-12-on basierten Bauteilen beibehalten wird. Schließlich ist wünschenswert eine verbesserte thermische Stabilität der erfindungsgemäßen orangen Hochvoltkomponenten unter thermischer Beanspruchung im Vergleich zu 12H-Phthaloperin-12-on basierten Bauteilen. Idealerweise sollen in einer Ausführungsform erfindungsgemäße orange Hochvoltkomponenten lasertransparent bzw. lasertransmittierend für Lichtwellenlängen im Bereich von 800 nm bis 1100 nm sein, um so die Voraussetzung für das Laserdurchstrahlschweißen an eine andere, im genannten Wellenlängenbereich absorbierende Baugruppe, zu ermöglichen.

Überraschend wurde nun gefunden, dass Hochvoltkomponenten, insbesondere Hochvoltkomponenten für die Elektromobilität, enthaltend thermoplastische Polymerzusammensetzungen auf Basis von Polyamid und 10,10'-Oxy-bis-12H-phthaloperin-12-on [CAS Nr. 203576-97-0] der Formel (I) die geforderten Anforderungen erfüllen.

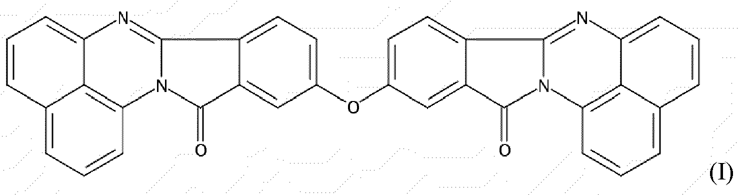

### Bleeding

Zur Ermittlung des Bleeding wird im Rahmen der vorliegenden Erfindung wie folgt verfahren:
Zunächst werden Kunststoffplatten aus einer Farbmittel enthaltenden und zu untersuchenden Polyamid-Zusammensetzung mit den Maßen 60•40•2 mm³ gefertigt. Anschließend wird eine Weich-PVC-Folie mit den Maßen 30•20•2 mm³ zwischen zwei der zunächst gefertigten Kunststoffplatten eingespannt und die Gesamtheit aller Platten in einem Heißlufttrockenschrank bei 80°C für 12 Stunden gelagert. Die anschließende Bewertung des aus den zwei Kunststoffplatten ins Weich-PVC migrierten Farbmittels erfolgt danach visuell nach dem Graumaßstab gemäß **ISO 105-A02,** wobei ,5` bedeutet, dass die PVC-Folie keine Farbänderung zeigt (kein visuell erkennbarer Farbmittelübergang von den Polyamid-Kunststoffplatten auf die PVC-Folie) und '1' bedeutet, dass die PVC-Folie eine starke Farbveränderung zeigt (starker visuell erkennbarer Farbmittelübergang von den Polyamid-Kunststoffplatten auf die PVC-Folie).

### Lichtechtheit

Als Maß für die Lichtechtheit (Lightfastness) gilt im Rahmen der vorliegenden Erfindung die Verfärbung nach UV-Lagerung von oben beschriebenen Kunststoffplatten einer zu untersuchenden und Farbmittel enthaltenden Polyamidzusammensetzung mit einem UV-Licht vom Typ Suntest CPS+ mit luftgekühlter Atlas Xenon Lampe, 1500 Watt, 45-130 klx, Wellenlänge 300 - 800 nm und Window Glass Filter 250-267 W/m² des Herstellers Atlas Material Testing Technology GmbH, Linsengericht, Deutschland, und einer Bestrahlungszeit von 96h. Die Bewertung der Verfärbung erfolgt im Rahmen der vorliegenden Erfindung visuell in Anlehnung an den Blaumaßstab (Blue Wool Scale) gemäß **DIN EN ISO 105-B02,** wobei ,8` für eine hervorragende Lichtechtheit (geringe Farbänderung) und '1' für sehr geringe Lichtechtheit (starke Farbänderung) steht.

### Erfindungsgegenstand

Gegenstand der Erfindung sind Polymerzusammensetzungen gemäß Anspruch 1.

Zudem wird die Verwendung von 10,10'-Oxybis-12H-phthaloperin-12-on zur Markierung Polyamid basierter Erzeugnisse als Hochvoltkomponenten beschrieben.

Er wird aber auch die Verwendung von 10,10'-Oxy-bis-12H-phthaloperin-12-on beschrieben zur Kennzeichnung von Polyamid basierten Hochvoltkomponenten, vorzugsweise von Hochvoltkomponenten für die Elektromobilität, mit der Signalfarbe Orange.

Es betrifft Polymerzusammensetzungen worin auf 100 Massenanteile Polyamid 0,01 bis 5 Massenanteile, bevorzugt 0,01 bis 3 Massenanteile, 10,10'-Oxy-bis-12H-phthaloperin-12-on eingesetzt werden mit der Maßgabe eines Farbabstands ΔE <20 von den L*a*b* Koordinaten einer mit "2" beginnenden Farbnummer der RAL-Farbtabelle, bevorzugt ein ΔE <10, besonders bevorzugt ΔE <5, und einer Lasertransparenz von mindestens 10%.

Gegenstand der Erfindung sind aber auch orange Hochvoltkomponenten, insbesondere Hochvoltkomponenten für die Elektromobilität, basierend auf Polymerzusammensetzungen enthaltend wenigstens ein Polyamid und 10,10'-Oxy-bis-12H-phthaloperin-12-on mit der Maßgabe dass
A) auf 100 Massenanteile wenigstens eines Polyamids,
B) 0,01 bis 5 Massenanteile 10,10'-Oxy-bis-12H-phthaloperin-12-on eingesetzt werden,, und mit des Maßgabe einenFarbabstands ΔE <20 von den L*a*b* Koordinaten einer mit "2" beginnenden Farbnummer der RAL-Farbtabelle aufweisen, bevorzugt ein ΔE <10, besonders bevorzugt ΔE <5, und einer Lasertransparenz von mindestens 10%.

Gegenstand der Erfindung sind aber auch orange Hochvoltkomponenten, insbesondere Hochvoltkomponenten für die Elektromobilität, basierend auf Polymerzusammensetzungen gemäß der Erfindung enthaltend wenigstens ein Polyamid und 10,10'-Oxy-bis-12H-phthaloperin-12-on, worin als Polyamid Polyamid 6 oder Polyamid 66 eingesetzt werden mit der Maßgabe eines Farbabstands ΔE <20 von den L*a*b* Koordinaten einer mit "2" beginnenden Farbnummer der RAL-Farbtabelle, bevorzugt ein ΔE <10, besonders bevorzugt ΔE <5, und einer Lasertransparenz von mindestens 10%.

Gegenstand der Erfindung sind aber auch orange Hochvoltkomponenten, insbesondere Hochvoltkomponenten für die Elektromobilität, basierend auf Polymerzusammensetzungen gemäß der Erfindung enthaltend auf 100 Massenanteile wenigstens ein Polyamids 0,01 bis 5 Massenanteile, besonders bevorzugt 0,01 bis 3 Massenanteile 10,10'-Oxy-bis-12H-phthaloperin-12-on mit der Maßgabe eines Farbabstands ΔE <20 von den L*a*b* Koordinaten einer mit "2" beginnenden Farbnummer der RAL-Farbtabelle, bevorzugt ein ΔE <10, besonders bevorzugt ΔE <5, und einer Lasertransparenz von mindestens 10%.

Die vorliegende Erfindung betrifft aber auch die Verwendung von 10,10'-Oxy-bis-12H-phthaloperin-12-on zur Herstellung orange Polyamid basierter Polymerzusammensetzungen gemäß der Erfindung, vorzugsweise Polyamid basierter orange Hochvoltkomponenten, insbesondere von Polyamid basierten Hochvoltkomponenten für die Elektromobilität mit der Maßgabe eines Farbabstands ΔE <20 von den L*a*b* Koordinaten einer mit "2" beginnenden Farbnummer der RAL-Farbtabelle, bevorzugt ein ΔE <10, besonders bevorzugt ΔE <5, und einer Lasertransparenz von mindestens 10%.

Die Zubereitung der erfindungsgemäßen Polymerzusammensetzungen für eine weitere Nutzung erfolgt durch Mischen der als Edukte einzusetzenden Komponenten A) und B) in wenigstens einem Mischwerkzeug. Hierdurch werden als Zwischenprodukte, auf den erfindungsgemäßen Zusammensetzungen basierende, Formmassen erhalten. Diese Formmassen können entweder ausschließlich aus den Komponenten A) und B) bestehen, oder aber zusätzlich zu den Komponenten A) und B) noch wenigstens eine weitere Komponente enthalten.

Zur Klarstellung sei angemerkt, dass vom Rahmen der vorliegenden Erfindung alle nachfolgend aufgeführten allgemeinen oder in Vorzugsbereichen genannten Definitionen und Parameter in beliebigen Kombinationen umfasst sind. Dies betrifft ebenso die Kombination der Mengenangaben zu den einzelnen Komponenten in Bezug auf die beanspruchten Verfahren und Verwendungen. Die im Rahmen dieser Anmeldung genannten Normen beziehen sich auf die zum Anmeldetag dieser Erfindung geltenden Fassung.

### Hochvolt

In der Regelung Nr. 100 der Wirtschaftskommission der Vereinten Nationen für Europa (UNECE) - Einheitliche Bedingungen für die Genehmigung von Fahrzeugen hinsichtlich der besonderen Anforderungen an den Elektroantrieb [2015/505] wird im Abschnitt 2.17 der Begriff "Hochspannung" (engl. "High Voltage") als eine Spannung beschrieben, für die ein elektrisches Bauteil oder ein Stromkreis ausgelegt ist, dessen Effektivwert der Betriebsspannung > 60 V und ≤ 1500 V (Gleichstrom) oder > 30 V und ≤ 1000 V (Wechselstrom) ist (V = Volt).

Diese Klassifizierung von "Hochspannung" entspricht der Spannungsklasse B der **ISO6469-3:2018** ("Electrically propelled road vehicles - Safety specifications - Part 3: Electrical safety"). Dort finden sich in Abschnitt 5.2 auch Kennzeichnungsvorschriften für elektrische Komponenten der Spannungsklasse B durch entsprechende Gefahrensymbole oder die Farbe 'Orange'.

In der vorliegenden Erfindung wird der Begriff "Hochvolt" und "Hochspannung" synonym verwendet.

### Hochvoltkomponenten bzw. Hochvoltkomponenten für die Elektromobilität

Unter dem Begriff Hochvoltkomponente werden erfindungsgemäß Bauteile oder Erzeugnisse verstanden, die einer Betriebsspannung gemäß Abschnitt 2.17 der oben beschriebenen Regelung Nr. 100 der Wirtschaftskommission der Vereinten Nationen für Europa (UNECE) ausgesetzt werden. Als Hochvoltkomponenten für die Elektromobilität werden erfindungsgemäß bevorzugt Bauteile in Elektrofahrzeugen bezeichnet, welche einer Betriebsspannung größer oder gleich 30V (Gleichstrom) beziehungsweise größer oder gleich 20V (Wechselstrom), besonders bevorzugt - in Anlehnung an die Spannungsklasse B der **ISO6469-3:2018** - einer Betriebsspannung von größer 60V Gleichstrom beziehungsweise größer 30V Wechselstrom ausgesetzt sind.

Zu den Hochvoltkomponenten für die Elektromobilität gehören erfindungsgemäß sowohl solche Bauteile, die direkt mit den spannungsführenden Teilen in Kontakt stehen, als auch solche, die in direkter Nachbarschaft bzw. räumlicher Nähe dazu die Funktion eines Berührungsschutzes, einer Warnkennzeichnung beziehungsweise einer Abschirmung haben, wobei Bauteile, die direkt mit den spannungsführenden Teilen in Kontakt stehen, erfindungsgemäß bevorzugt sind.

Erfindungsgemäße Hochvoltkomponenten für die Elektromobilität sind bevorzugt orange eingefärbt, wobei Farbtöne, die im RAL-Farbsystem der Farbnummer RAL2001,RAL2003, RAL2004, RAL2007, RAL2008, RAL2009, RAL2010 und RAL2011 entsprechen, besonders bevorzugt sind und die Farbtöne die im RAL-Farbsystem der Farbnummer RAL2003, RAL2008 und RAL2011 entsprechen, ganz besonders bevorzugt sind.

Erfindungsgemäß zulässige "ähnliche Farbtöne" sind solche, deren Farbabstand im L*a*b*-System einen ΔE von <20, bevorzugt ein ΔE <10, besonders bevorzugt ΔE <5 zu einer mit "2" beginnenden Farbnummer der RAL-Farbtabelle aufweisen. Zur Erläuterung des in **EN ISO 11664-4** definierten ΔE siehe beispielsweise:
**https://de.wikipedia.org/wiki/Delta_E.**

In einer Ausführungsform der vorliegenden Erfindung sind die erfindungsgemäßen Hochvoltkomponenten für die Elektromobilität durch Zugabe weiterer Komponenten so ausgelegt, dass sie für Laserlicht der Wellenlänge im Bereich von 800nm bis 1100nm absorbierend sind, so dass bei Kombination einer lasertransparenten und einer laserabsorbierenden Einstellung eine Laserverschweißbarkeit möglich ist.

### Orange

Im Rahmen der vorliegenden Erfindung gilt als Orange eine Farbe, die im RAL Farbsystem nach **https://de.wikipedia.org/wiki/RAL-Farbe#Orange** in der RAL Farbtabelle eine Farbnummer hat, die mit einer "2" beginnt. Im Einzelnen unterscheidet man zum Anmeldetag der vorliegenden Erfindung Orangetöne gemäß **Tab.1:**

**Tab. 1**

| | | L* | a* | b* |
|---|---|---|---|---|
| RAL 2000 | Gelborange | 58,20 | 37,30 | 68,68 |
| RAL 2001 | Rotorange | 49,41 | 39,79 | 35,29 |
| RAL 2002 | Blutorange | 47,74 | 47,87 | 33,73 |
| RAL 2003 | Pastellorange | 66,02 | 41.22 | 52,36 |
| RAL 2004 | Reinorange | 56,89 | 50,34 | 49,81 |
| RAL 2005 | Leuchtorange | 72,27 | 87,78 | 82,31 |
| RAL 2007 | Leuchthellorange | 76,86 | 47,87 | 97,63 |
| RAL 2008 | Hellrotorange | 60,33 | 46,91 | 60,52 |
| RAL 2009 | Verkehrsorange | 55,83 | 47,79 | 48,83 |
| RAL 2010 | Signalorange | 55,39 | 40,10 | 42,42 |
| RAL 2011 | Tieforange | 59,24 | 40,86 | 64,50 |
| RAL 2012 | Lachsorange | 57,75 | 40,28 | 30,66 |
| RAL 2013 | Perlorange | 40,73 | 32,14 | 34,92 |

In **Tab. 1** sind die geräteunabhängigen CIE L*a*b* Farbwerte für den jeweiligen RAL Wert angegeben: L* steht für die Luminanz, a* = D65 und b* = 10°. Das Farbmodell ist in der **EN ISO 11664-4** "Colorimetry -- Part 4: CIE 1976 L*a*b* Colour space" genormt. Zu L*a*b*-Farbraum (auch: CIELAB) siehe: **https://de.wikipedia.org/wiki/Lab-Farbraum.** Jede Farbe im Farbraum ist durch einen Farbort mit den kartesischen Koordinaten {L*, a*, b*} definiert. Die a*b*-Koordinatenebene wurde in Anwendung der Gegenfarbentheorie konstruiert. Auf der a*-Achse liegen sich Grün und Rot gegenüber, die b*-Achse verläuft zwischen Blau und Gelb. Komplementäre Farbtöne stehen sich jeweils um 180° gegenüber, in ihrer Mitte (dem Koordinatenursprung a*=0, b*=0) ist Grau.

Die L*-Achse beschreibt die Helligkeit (Luminanz) der Farbe mit Werten von 0 bis 100. In der Darstellung steht diese im Nullpunkt senkrecht auf der a*b*-Ebene. Sie kann auch als Neutralgrauachse bezeichnet werden, denn zwischen den Endpunkten Schwarz (L*=0) und Weiß (L*=100) sind alle unbunten Farben (Grautöne) enthalten. Die a*-Achse beschreibt den Grün- oder Rotanteil einer Farbe, wobei negative Werte für Grün und positive Werte für Rot stehen. Die b*-Achse beschreibt den Blau- oder Gelbanteil einer Farbe, wobei negative Werte für Blau und positive Werte für Gelb stehen.

Die a*-Werte reichen von ca. -170 bis +100, die b*-Werte von -100 bis +150, wobei die Maximalwerte nur bei mittlerer Helligkeit bestimmter Farbtöne erreicht werden. Der CIELAB-Farbkörper hat im mittleren Helligkeitsbereich seine größte Ausdehnung, die aber je nach Farbbereich unterschiedlich in Höhe und Größe ist.

Erfindungsgemäß umfasst sind orange ähnliche Farbtöne die einen Farbabstand ΔE <20 zwischen den L*a*b* Koordinaten der Polymerzusammensetzung und den L*a*b* Koordinaten einer mit "2" beginnenden Farbnummer der RAL-Farbtabelle aufweisen, bevorzugt ein ΔE <10, besonders bevorzugt ΔE <5.

### Laserdurchstrahlschweißen

Ein weiteres technisches Einsatzgebiet für amorphe und teilkristalline Polyamide ist das Laserdurchstrahlschweißen, auch als Lasertransmissionsschweißen oder kurz Laserschweißen bezeichnet. Grundlage des Laserdurchstrahlschweißens von Kunststoffen ist die Strahlungsabsorption in der Formmasse. Dabei handelt es sich um einen Fügeprozess, bei dem zwei Fügepartner aus in der Regel thermoplastischen Kunststoffen stoffschlüssig miteinander verbunden werden. Hierfür weist ein Fügepartner im Bereich der verwendeten Laserwellenlänge einen hohen Transmissionsgrad und der andere einen hohen Absorptionsgrad auf. Der Fügepartner mit dem hohen Transmissionsgrad wird vom Laserstrahl im Wesentlichen ohne Erwärmung durchstrahlt. Beim Kontakt mit dem Fügepartner mit dem hohen Absorptionsgrad wird die eingestrahlte Laserenergie oberflächennah absorbiert und in Wärmeenergie umgewandelt, wobei der Kunststoff aufgeschmolzen wird. Aufgrund von Wärmeleitungsprozessen wird auch der lasertransparente Fügepartner im Bereich der Fügezone plastifiziert. Übliche, beim Lasertransmissionsschweißen eingesetzte Laserquellen emittieren in einem Wellenlängenbereich von etwa 600 bis 1200 nm. Gebräuchlich sind insbesondere Hochleistungsdiodenlaser (HDL, X = 800 -1100 nm) und Festkörperlaser (z. B. Nd: YAG-Laser, X = 1060-1090 nm). Viele nicht additivierte Polymere sind für Laserstrahlung weitgehend transparent bzw. transluzent, d.h. sie absorbieren nur schlecht. Durch geeignete Farbmittel, aber auch weitere Additive, wie Füll- bzw. Verstärkungsstoffe, kann die Absorption und damit die Umwandlung von Laserlicht in Wärme gesteuert werden. Dem absorbierenden Fügepartner werden häufig absorbierende Pigmente zugesetzt, bei denen es sich im Falle dunkler Fügepartner meist um Rußpigmente handelt. Diese Vorgehensweise ist für den lasertransparenten Fügepartner nicht möglich, da beispielsweise mit Ruß eingefärbte Polymere keine ausreichende Transmission für das Laserlicht aufweisen. Dasselbe gilt für viele organische Farbstoffe, wie z.B. Nigrosin. Es besteht somit ein Bedarf an Formteilen, die trotz ihrer Einfärbung eine ausreichende Transmission für das Laserlicht aufweisen, so dass sie als die lasertransparente Komponente beim Laserdurchstrahlschweißen eingesetzt werden können.

Die grundlegenden Prinzipien des Laserdurchstrahlschweißens sind dem Fachmann aus Kunststoffe 87 (1997) 3, 348-350**,** Kunststoffe 87 (1997) 11, 1632-1640**,** Kunststoffe 88 (1998) 2, 210-121**,** Plastverarbeiter 46 (1995) 9, 42-46 und Plastverarbeiter 50 (1999) 4 18-19 bekannt. Die Messung des Transmissionsvermögens eines Polymer-Formteils für Laserlicht einer Wellenlange von 600 bis 1200 nm kann z.B. mit einem Spektralphotometer und einer integrierenden Photometerkugel erfolgen. Diese Messanordnung ermöglicht auch, den diffusen Anteil der transmittierten Strahlung zu bestimmen. Geeignete Laserquellen zum Lasertransmissionsschweißen emittieren im oben genannten Wellenlängenbereich von etwa 600 bis 1200 nm, wobei die oben genannten Hochleistungsdiodenlaser oder Festkörperlaser eingesetzt werden. Hinsichtlich der bei der Herstellung der Formteile für das Laserdurchstrahlschweißen einzusetzenden Polyamid basierten Polymerzusammensetzungen wird auf die nachfolgenden Ausführungen in vollem Umfang Bezug genommen, dass zur Herstellung eines lasertransparenten Formteils im Wesentlichen keine Komponenten eingesetzt werden, die im Wellenlangenbereich des für das Laserdurchstrahlschweißen eingesetzten Lasers absorbieren. Dies gilt speziell, wenn der Zusammensetzung für das lasertransparente Formteil wenigstens eine der Komponenten C) Füll- und Verstärkungsstoff, D) Flammschutzmittel oder E) Additive beigefügt werden. Vorzugsweise werden zur Herstellung des lasertransparenten Formteils zusätzlich zur erfindungsgemäß einzusetzenden Komponente B) keine weiteren im Laserprozess relevanten Wellenlängenbereich absorbierenden oder streuenden Additive E) eingesetzt.

Die Herstellung von Polyamidzusammensetzungen zur Herstellung von Formteilen zur Verwendung für das Laserdurchstrahlschweißen erfolgt nach an sich bekannten Verfahren. Typischerweise erfolgt zunächst das Mischen der Komponenten in den entsprechenden Massenanteilen. Vorzugsweise geschieht das Mischen der Komponenten bei erhöhten Temperaturen durch gemeinsames Vermengen, Vermischen, Kneten, Extrudieren oder Verwalzen. Die Temperatur beim Mischen liegt vorzugsweise in einem Bereich von 220 bis 340 °C, besonders bevorzugt in einem Bereich von 240 bis 300 °C und speziell in einem Bereich von 250 bis 290 °C. Es kann vorteilhaft sein, einzelne Komponenten vorzumischen. Es ist weiterhin auch möglich, die Formteile aus einer deutlich unterhalb der Schmelztemperatur des jeweiligen Polyamids hergestellten physikalischen Mischung (Dryblend) vorgemischter Komponenten und/oder einzelner Komponenten direkt herzustellen. Die Temperatur beim Mischen von Dryblends liegt vorzugsweise in einem Bereich von 0 bis 100 °C, besonders bevorzugt in einem Bereich von 10 bis 50 °C, speziell bei Umgebungstemperatur (25 °C +/- 3 °C). Die Formmassen können nach üblichen Verfahren, vorzugsweise durch Spritzguss oder Extrusion, zu Formteilen verarbeitet werden.

Aktuell gibt es noch keine Norm, auf deren Basis eine Messung zur Lasertransparenz erfolgen muss. Daher misst der Fachmann wie folgt: an 5 Platten mit den Maßen 60 mm • 60 mm • 2 mm mit einer hochglanzpolierten Oberfläche wird jeweils an 5 definierten Messstellen die Lasertransparenz gemessen. Aus diesen Werten wird der Mittelwert der Lasertransparenz gebildet. Vor der Messung werden die Platten dafür in Barriere-PE-Beuteln verpackt (PE = Polyethylen) und im spritzfrischen Zustand nach 24 Stunden am Messgerät geprüft. Siehe: K.D. Feddersen "Laserdurchstrahlschweißen - die Lösung für nicht lösbare Verbindungen", Österreichische Kunststoffzeitschrift 1/2 2018, Seiten 50 - 52**.** Spritzfrischer Zustand, auch als dry-as-molded bezeichnet, bedeutet im Sinne der vorliegenden Erfindung, dass im unmittelbaren Anschluss an das Spritzgießen die im Rahmen der in der vorliegenden Erfindung zu untersuchenden Probekörper für mindestens 16 Stunden und bis zur Durchführung der jeweiligen Untersuchung bei 23 ± 2 °C und einer relativen Luftfeuchte von 50 ± 10 % gelagert werden. Bezüglich der Bestimmung des Wassergehalts sei auf **ISO 15512:2009-10** verwiesen.

Die Transparenz der im Rahmen der vorliegenden Anmeldung untersuchten Proben wurde in Übereinstimmung mit der **DVS-Richtlinie 2243 (01/2014)** "Laserstrahlschweißen thermoplastischer Kunststoffe" anhand von Plättchen mit den Maßen 60 mm • 60 mm • 2 mm im nahen Infrarot (NIR) mit dem Transmissionsmessgerät LPKF TMG3 der Firma LPKF Laser & Electronics AG, Garbsen, Deutschland, das zuvor mit einem nach **DIN EN ISO/IEC 17025** erzeugten Messnormal kalibriert wurde, bei einer Laserwellenlänge von 980 nm gemessen; siehe: LPKF AG 101016-DE: "Einfache Transmissionsmessung für Kunststoffe LPKF TMG3**".**

Als lasertransparent oder auch lasertransmittierend werden im Rahmen der vorliegenden Erfindung Polymerzusammensetzungen oder Hochvoltkomponenten bezeichnet, die bei einer Wellenlänge von 980 nm eine Transmission von mindestens 10% aufweisen. Als laserabsorbierend wird im Rahmen der vorliegenden Erfindung verstanden, wenn die Transmission durch die oben beschriebenen Plättchen mit einer Dicke von 2mm nach der o.g. Methode kleiner als 0,5% ist.

### Weitere bevorzugte Ausführungsformen der Erfindung

In einer bevorzugten Ausführungsform betrifft die Erfindung Zusammensetzungen oder Hochvoltkomponenten, insbesondere Hochvoltkomponenten für die Elektromobilität, enthaltend thermoplastische Polymerzusammensetzungen umfassend zusätzlich zu den Komponenten A) und B) noch C) wenigstens einen **Füll und/oder Verstärkungsstoff,** bevorzugt zu 1 bis 150 Massenanteilen, besonders bevorzugt zu 5 bis 80 Massenanteilen, ganz besonders bevorzugt zu 10 bis 50 Massenanteilen, jeweils bezogen auf 100 Massenanteile der Komponente A) mit der Maßgabe eines Farbabstands ΔE <20 von den L*a*b* Koordinaten einer mit "2" beginnenden Farbnummer der RAL-Farbtabelle und einer Lasertransparenz von mindestens 10%.

In einer weiteren bevorzugten Ausführungsform betrifft die Erfindung Zusammensetzungen oder Hochvoltkomponenten, insbesondere Hochvoltkomponenten für die Elektromobilität, enthaltend thermoplastische Polymerzusammensetzungen umfassend zusätzlich zu den Komponenten A) bis C) oder anstelle von C) noch D) wenigstens ein **Flammschutzmittel,** bevorzugt zu 3 bis 100 Massenanteilen, besonders bevorzugt zu 5 bis 80 Massenanteilen, ganz besonders bevorzugt zu 10 bis 50 Massenanteilen, jeweils bezogen auf 100 Massenanteile der Komponente A) mit der Maßgabe eines Farbabstands ΔE <20 von den L*a*b* Koordinaten einer mit "2" beginnenden Farbnummer der RAL-Farbtabelle und einer Lasertransparenz von mindestens 10%.

In einer weiteren bevorzugten Ausführungsform betrifft die Erfindung Zusammensetzungen oder Hochvoltkomponenten, insbesondere Hochvoltkomponenten für die Elektromobilität, enthaltend thermoplastische Polymerzusammensetzungen umfassend zusätzlich zu den Komponenten A) bis E) oder anstelle von C) und/oder D) noch E) wenigstens ein weiteres **von den Komponenten B), C) und D) verschiedenes Additiv,** bevorzugt zu 0,01 bis 80 Massenanteile, besonders bevorzugt zu 0,05 bis 50 Massenanteile, ganz besonders bevorzugt zu 0,1 bis 30 Massenanteile, jeweils bezogen auf 100 Massenanteile der Komponente A) mit der Maßgabe eines Farbabstands ΔE <20 von den L*a*b* Koordinaten einer mit "2" beginnenden Farbnummer der RAL-Farbtabelle und einer Lasertransparenz von mindestens 10%.

### Komponente A)

Die erfindungsgemäß als Komponente A) im Rahmen der vorliegenden Erfindungen einzusetzenden **Polyamide** können nach verschiedenen Verfahren hergestellt und aus unterschiedlichen Bausteinen synthetisiert werden. Zur Herstellung von Polyamiden sind eine Vielzahl von Verfahrensweisen bekannt geworden, wobei je nach gewünschtem Endprodukt unterschiedliche Monomerbausteine, verschiedene Kettenregler zur Einstellung eines angestrebten Molekulargewichtes oder auch Monomere mit reaktiven Gruppen für später beabsichtigte Nachbehandlungen eingesetzt werden können.

Die technisch relevanten Verfahren zur Herstellung von Polyamiden laufen meist über die Polykondensation in der Schmelze. In diesem Rahmen wird auch die hydrolytische Polymerisation von Lactamen als Polykondensation verstanden.

Als Edukte kommen aliphatische und/oder aromatische Dicarbonsäuren wie Adipinsäure, 2,2,4- und 2,4,4-Trimethyladipinsäure, Azelainsäure, Sebazinsäure, Isophthalsäure, Terephthalsäure, aliphatische und/oder aromatische Diamine wie z.B. Tetramethylendiamin, Hexamethylendiamin, 1,9-Nonandiamin, 2,2,4- und 2,4,4-Trimethylhexamethylendiamin, die isomeren Diamino-dicyclohexylmethane, Diaminodicyclohexylpropane, Bisaminomethylcyclohexan, Phenylendiamine, Xylylendiamine, Aminocarbonsäuren wie z.B. Aminocapronsäure, bzw. die entsprechenden Lactame in Betracht. Besonders bevorzugt werden Caprolactame, insbesondere ε-Caprolactam eingesetzt. Copolyamide aus mehreren der genannten Monomeren sind eingeschlossen.

Bevorzugte Polyamide sind teilkristalline Polyamide, die ausgehend von Diaminen und Dicarbonsäuren und/oder Lactamen mit wenigstens 5 Ringgliedern oder entsprechenden Aminosäuren hergestellt werden können.

Als besonders bevorzugte Polyamide werden Polyamid 6, Polyamid 66, Polyamid 46 und/oder teilaromatischen Copolyamide. Bevorzugte teilaromatische Copolyamide sind PA6T/6, PA6T/66, PA6T/6I oder PA6T/6I/66.

Erfindungsgemäß ganz besonders bevorzugte Polyamide sind Polyamid 6 und Polyamid 66, wobei Polyamid 6 insbesondere ganz besonders bevorzugt ist.

Die im Rahmen der vorliegenden Anmeldung benutzte Kennzeichnung der Polyamide entspricht der internationalen Norm **ISO 1874-1,** wobei die erste(n) Ziffer(n) die C-Atomzahl des Ausgangsdiamins und die letzte(n) Ziffer(n) die C-Atomzahl der Dicarbonsäure angeben. Wird nur eine Zahl angegeben, wie im Falle des PA6, so bedeutet dies, dass von einer α,ω- Aminocarbonsäure bzw. von dem davon abgeleiteten Lactam, im Falle des PA 6 also dem ε-Caprolactam, ausgegangen worden ist.

Das erfindungsgemäß bevorzugt als Komponente A) einzusetzende PA6 [CAS Nr. 25038-54-4] hat vorzugsweise eine nach **ISO 307** in 0,5 gew.-%iger Lösung in 96 gew.-%iger Schwefelsäure bei 25 °C zu bestimmende Viskositätszahl im Bereich von 80 bis 180 ml/g, besonders bevorzugt im Bereich von 85 bis 160 ml/g und ganz besonders bevorzugt im Bereich von 90 bis 140 ml/g. Erfindungsgemäß bevorzugt als Komponente A) einzusetzendes Polyamid 6 ist beispielswiese als Durethan^{®} B26 bei der Lanxess Deutschland GmbH, Köln erhältlich.

Bevorzugt weist ein als Komponente A) einzusetzendes Polyamid 66 [CAS Nr. 32131-17-2] eine nach **ISO 307** in 0,5 gew.-%iger Lösung in 96 gew.-%iger Schwefelsäure bei 25 °C zu bestimmende Viskositätszahl im Bereich von 80 bis 180 ml/g auf, ganz besonders bevorzugt eine Viskositätszahl im Bereich von 85 bis 160 ml/g, insbesondere bevorzugt im Bereich von 90 bis 140 ml/g. Erfindungsgemäß als Komponente A) einzusetzendes Polyamid 66 ist beispielsweise als Ultramid^{®} A24E01 bei der BASF SE, Ludwigshafen, erhältlich.

Das erfindungsgemäß als Komponente A) einzusetzende Polyamid kann auch im Gemisch mit wenigstens einem anderen Polyamid und/oder wenigstens einem anderen Polymer eingesetzt werden. Bevorzugte andere Polymere werden ausgewählt aus der Gruppe Polyethylen, Polypropylen und Acrylnitril-Butadien-Styrol-Copolymerisat (ABS). Im Falle des Einsatzes wenigstens eines weiteren Polyamids oder wenigstens eines anderen Polymers erfolgt dieser vorzugsweise oder gegebenenfalls unter Einsatz wenigstens eines Kompatibilisators.

Dem als Komponente A) einzusetzenden Polyamid können übliche Additive, vorzugsweise dem Fachmann bekannte Entformungsmittel, Stabilisatoren und/oder Fließhilfsmittel bereits in der Schmelze zugemischt werden.

Erfindungsgemäß bevorzugt sind deshalb Polymerzusammensetzungen enthaltend wenigstens Polyamid 6 und 10,10'-Oxy-bis-12H-phthaloperin-12-on.

Erfindungsgemäß bevorzugt sind zudem Polymerzusammensetzungen enthaltend Polyamid 66 und 10,10'-Oxy-bis-12H-phthaloperin-12-on.

Bevorzugt sind ferner Polymerzusammensetzungen worin auf 100 Massenanteile Polyamid 6 oder Polyamid 66, 0,01 bis 5 Massenanteile, besonders bevorzugt 0,01 bis 3 Massenanteile, 10,10'-Oxy-bis-12H-phthaloperin-12-on eingesetzt werden.

Bevorzugt sind ferner Polymerzusammensetzungen worin auf 100 Massenanteile Polyamid 6, 0,01 bis 5 Massenanteile, besonders bevorzugt 0,01 bis 3 Massenanteile, 10,10'-Oxy-bis-12H-phthaloperin-12-on eingesetzt werden.

Bevorzugt sind ferner Polymerzusammensetzungen worin auf 100 Massenanteile Polyamid 66, 0,01 bis 5 Massenanteile, besonders bevorzugt 0,01 bis 3 Massenanteile, 10,10'-Oxy-bis-12H-phthaloperin-12-on eingesetzt werden.

Gegenstand der Erfindung sind aber auch orange Hochvoltkomponenten, insbesondere Hochvoltkomponenten für die Elektromobilität, basierend auf erfindungsgemäße Polymerzusammensetzungen enthaltend wenigstens ein Polyamid 6 oder Polyamid 66 und 10,10'-Oxy-bis-12H-phthaloperin-12-on.

Gegenstand der Erfindung sind aber auch orange Hochvoltkomponenten, insbesondere Hochvoltkomponenten für die Elektromobilität, basierend auf erfindungsgemäße Polymerzusammensetzungen enthaltend Polyamid 6 und 10,10'-Oxy-bis-12H-phthaloperin-12-on.

Gegenstand der Erfindung sind aber auch orange Hochvoltkomponenten, insbesondere Hochvoltkomponenten für die Elektromobilität, basierend auf erfindungsgemäße Polymerzusammensetzungen enthaltend Polyamid 66 und 10,10'-Oxy-bis-12H-phthaloperin-12-on.

Gegenstand der Erfindung sind aber auch orange Hochvoltkomponenten, insbesondere Hochvoltkomponenten für die Elektromobilität, basierend auf erfindungsgemäße Polymerzusammensetzungen enthaltend auf 100 Massenanteile Polyamid 6 oder Polyamid 66, 0,01 bis 5 Massenanteile, besonders bevorzugt 0,01 bis 3 Massenanteile 10,10'-Oxy-bis-12H-phthaloperin-12-on.

Gegenstand der Erfindung sind aber auch orange Hochvoltkomponenten, insbesondere Hochvoltkomponenten für die Elektromobilität, basierend auf erfindungsgemäße Polymerzusammensetzungen enthaltend auf 100 Massenanteile Polyamid 6, 0,01 bis 5 Massenanteile, besonders bevorzugt 0,01 bis 3 Massenanteile 10,10'-Oxy-bis-12H-phthaloperin-12-on.

Gegenstand der Erfindung sind aber auch orange Hochvoltkomponenten, insbesondere Hochvoltkomponenten für die Elektromobilität, basierend erfindungsgemäße auf Polymerzusammensetzungen enthaltend auf 100 Massenanteile Polyamid 66, 0,01 bis 5 Massenanteile, besonders bevorzugt 0,01 bis 3 Massenanteile 10,10'-Oxy-bis-12H-phthaloperin-12-on.

Gegenstand der Erfindung sind aber auch **lasertransparente** orange Hochvoltkomponenten, insbesondere Hochvoltkomponenten für die Elektromobilität, mit einer Lasertransparenz bei einer Wellenlänge von 980 nm von mindestens 10% basierend auf erfindungsgemäße Polymerzusammensetzungen enthaltend auf 100 Massenanteile Polyamid 6 oder Polyamid 66, 0,01 bis 3 Massenanteile 10,10'-Oxy-bis-12H-phthaloperin-12-on mit der Maßgabe eines Farbabstands ΔE <20 von den L*a*b* Koordinaten einer mit "2" beginnenden Farbnummer der RAL-Farbtabelle.

Gegenstand der Erfindung sind aber auch **lasertransparente** orange Hochvoltkomponenten, insbesondere Hochvoltkomponenten für die Elektromobilität, mit einer Lasertransparenz bei einer Wellenlänge von 980 nm von mindestens 10% basierend auf erfindungsgemäße Polymerzusammensetzungen enthaltend auf 100 Massenanteile Polyamid 6, 0,01 bis 3 Massenanteile 10,10'-Oxy-bis-12H-phthaloperin-12-on mit der Maßgabe eines Farbabstands ΔE <20 von den L*a*b* Koordinaten einer mit "2" beginnenden Farbnummer der RAL-Farbtabelle.

Gegenstand der Erfindung sind aber auch **lasertransparente** orange Hochvoltkomponenten, insbesondere Hochvoltkomponenten für die Elektromobilität, mit einer Lasertransparenz bei einer Wellenlänge von 980 nm von mindestens 10% basierend auf erfindungsgemäße Polymerzusammensetzungen enthaltend auf 100 Massenanteile Polyamid 66, 0,01 bis 3 Massenanteile 10,10'-Oxy-bis-12H-phthaloperin-12-on mit der Maßgabe eines Farbabstands ΔE <20 von den L*a*b* Koordinaten einer mit "2" beginnenden Farbnummer der RAL-Farbtabelle.

Gegenstand der Erfindung sind aber auch **laserabsorbierende** orange Hochvoltkomponenten, insbesondere Hochvoltkomponenten für die Elektromobilität, basierend auf erfindungsgemäße Polymerzusammensetzungen enthaltend auf 100 Massenanteile **Polyamid 6 oder Polyamid 66,** 0,01 bis 3 Massenanteile 10,10'-Oxy-bis-12H-phthaloperin-12-on sowie wenigstens einen Laserabsorber ausgewählt aus der Gruppe Antimontrioxid, Zinnoxid, Zinnorthophosphat, Bariumtitanat, Aluminiumoxid, Kupferhydroxyphosphat, Kupferorthophosphat, Kaliumkupferdiphosphat, Kupferhydroxid, Antimonzinnoxid, Bismuttrioxid und Antrachinon, mit der Maßgabe eines Farbabstands ΔE <20 von den L*a*b* Koordinaten einer mit "2" beginnenden Farbnummer der RAL-Farbtabelle Besonders bevorzugt sind Zinnoxid, Antimontrioxid oder Antimonzinnoxid. Ganz besonders bevorzugt ist Antimontrioxid. Bevorzugt wird der als Additiv E) einzusetzende Laserabsorber zu 0,01 bis 80 Massenanteilen, besonders bevorzugt zu 0,05 bis 50 Massenanteilen, ganz besonders bevorzugt zu 0,1 bis 30 Massenanteilen jeweils bezogen auf 100 Massenanteile der Komponente A) eingesetzt.

Gegenstand der Erfindung sind aber auch **laserabsorbierende** orange Hochvoltkomponenten, insbesondere Hochvoltkomponenten für die Elektromobilität, basierend auf erfindungsgemäße Polymerzusammensetzungen enthaltend auf 100 Massenanteile **Polyamid 6,** 0,01 bis 3 Massenanteile 10,10'-Oxy-bis-12H-phthaloperin-12-on sowie wenigstens einen Laserabsorber ausgewählt aus der Gruppe Antimontrioxid, Zinnoxid, Zinnorthophosphat, Bariumtitanat, Aluminiumoxid, Kupferhydroxyphosphat, Kupferorthophosphat, Kaliumkupferdiphosphat, Kupferhydroxid, Antimonzinnoxid, Bismuttrioxid und Antrachinon, mit der Maßgabe eines Farbabstands ΔE <20 von den L*a*b* Koordinaten einer mit "2" beginnenden Farbnummer der RAL-Farbtabelle. Besonders bevorzugt sind Zinnoxid, Antimontrioxid oder Antimonzinnoxid. Ganz besonders bevorzugt ist Antimontrioxid. Bevorzugt wird der als Additiv E) einzusetzende Laserabsorber zu 0,01 bis 80 Massenanteilen, besonders bevorzugt zu 0,05 bis 50 Massenanteilen, ganz besonders bevorzugt zu 0,1 bis 30 Massenanteilen jeweils bezogen auf 100 Massenanteile der Komponente A) eingesetzt.

Gegenstand der Erfindung sind aber auch **laserabsorbierende** orange Hochvoltkomponenten, insbesondere Hochvoltkomponenten für die Elektromobilität, basierend auf erfindungsgemäße Polymerzusammensetzungen enthaltend auf 100 Massenanteile **Polyamid 66,** 0,01 bis 3 Massenanteile 10,10'-Oxy-bis-12H-phthaloperin-12-on sowie wenigstens einem Laserabsorber ausgewählt aus der Gruppe Antimontrioxid, Zinnoxid, Zinnorthophosphat, Bariumtitanat, Aluminiumoxid, Kupferhydroxyphosphat, Kupferorthophosphat, Kaliumkupferdiphosphat, Kupferhydroxid, Antimonzinnoxid, Bismuttrioxid und Antrachinon, mit der Maßgabe eines Farbabstands ΔE <20 von den L*a*b* Koordinaten einer mit "2" beginnenden Farbnummer der RAL-Farbtabelle. Besonders bevorzugt sind Zinnoxid, Antimontrioxid oder Antimonzinnoxid. Ganz besonders bevorzugt ist Antimontrioxid. Bevorzugt wird der als Additiv E) einzusetzende Laserabsorber zu 0,01 bis 80 Massenanteilen, besonders bevorzugt zu 0,05 bis 50 Massenanteilen, ganz besonders bevorzugt zu 0,1 bis 30 Massenanteilen jeweils bezogen auf 100 Massenanteile der Komponente A) eingesetzt.

Die vorliegende Erfindung betrifft aber auch die **Verwendung von 10,10'-Oxy-bis-12H-phthaloperin-12-on** zur Herstellung **Polyamid 6 oder Polyamid 66** basierter orange Polymerzusammensetzungen gemäß der Erfindung, vorzugsweise Polyamid 6 oder Polyamid 66 basierter Hochvoltkomponenten, insbesondere von Polyamid 6 oder Polyamid 66 basierten Hochvoltkomponenten für die Elektromobilität.

Die vorliegende Erfindung betrifft aber auch die Verwendung von 10,10'-Oxy-bis-12H-phthaloperin-12-on zur Herstellung **Polyamid** 6 basierter orange Polymerzusammensetzungen gemäß der Erfindung, vorzugsweise Polyamid 6 basierter Hochvoltkomponenten, insbesondere von Polyamid 6 basierten Hochvoltkomponenten für die Elektromobilität.

Die vorliegende Erfindung betrifft aber auch die Verwendung von 10,10'-Oxy-bis-12H-phthaloperin-12-on zur Herstellung **Polyamid 66** basierter orange Polymerzusammensetzungen gemäß der Erfindung, vorzugsweise Polyamid 66 basierter Hochvoltkomponenten, insbesondere von Polyamid 66 basierten Hochvoltkomponenten für die Elektromobilität.

Schließlich wird beschrieben die **Verwendung von 10,10'-Oxybis-12H-phthaloperin-12-on zur Markierung Polyamid 6 oder Polyamid 66** basierter Erzeugnisse als Hochvoltkomponenten.

Schließlich wird beschrieben die **Verwendung von 10,10'-Oxybis-12H-phthaloperin-12-on zur Markierung Polyamid 6** basierter Erzeugnisse als Hochvoltkomponenten.

Schließlich wird beschrieben die **Verwendung von 10,10'-Oxybis-12H-phthaloperin-12-on zur Markierung Polyamid 66** basierter Erzeugnisse als Hochvoltkomponenten.

### Komponente B)

Erfindungsgemäß wird als Komponente B) 10,10'-Oxy-bis-12H-phthaloperin-12-on [CAS No. 203576-97-0] der Formel (I) 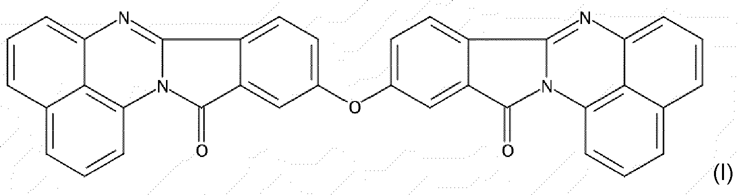 eingesetzt. 10,10'-Oxy-bis-12H-phthaloperin-12-on kann entweder nach dem in der EP 1 118 640 A1 unter Beispiel 3) genannten Syntheseweg hergestellt werden, oder ist bei Angene International Limited, UK Office, Churchill House, London erhältlich.

10,10'-Oxy-bis-12H-phthaloperin-12-on kann direkt als Pulver oder aber in Form eines Masterbatches, Kompaktes oder Konzentrates eingesetzt werden, wobei Masterbatche bevorzugt sind und Masterbatche in einer der jeweiligen Komponente A) entsprechenden Polymermatrix besonders bevorzugt sind.

### Komponente C)

In bevorzugter Ausführungsform wird als Komponente C) wenigstens ein **Füllstoff oder Verstärkungsstoff** eingesetzt. Dabei können auch Mischungen aus zwei oder mehreren unterschiedlichen Füllstoffen und/oder Verstärkungsstoffen eingesetzt werden.

Vorzugsweise wird wenigstens ein Füll- oder Verstärkungsstoff aus der Gruppe Kohlenstofffasern [CAS Nr. 7440-44-0], Glaskugeln oder Voll- oder Hohlglaskugeln, oder Glasfasern, oder gemahlenes Glas, amorphes Quarzglas, Aluminium-Borsilikatglas mit einem Alkaligehalt 1% (E-Glas) [CAS Nr. 65997-17-3], amorphe Kieselsäure [CAS Nr. 7631-86-9], Quarzmehl [CAS Nr. 14808-60-7], Calciumsilicat [CAS Nr. 1344-95-2], Calciummetasilicat [CAS Nr. 10101-39-0], Magnesiumcarbonat [CAS Nr. 546-93-0], Kaolin [CAS Nr. 1332-58-7], calciniertes Kaolin [CAS Nr. 92704-41-1], Kreide [CAS Nr.1317-65-3], Kyanit [CAS Nr. 1302-76-7], gepulverter oder gemahlener Quarz [CAS Nr. 14808-60-7], Glimmer [CAS Nr. 1318-94-1], Phlogopit [CAS Nr. 12251-00-2], Bariumsulfat [CAS Nr. 7727-43-7], Feldspat [CAS Nr. 68476-25-5], Wollastonit [CAS Nr. 13983-17-0], Montmorillonit [CAS Nr. 67479-91-8], Pseudoböhmit der Formel AlO(OH), Magnesiumcarbonat [CAS Nr. 12125-28-9] und Talkum [CAS Nr. 14807-96-6] eingesetzt.

Unter den faserförmigen Füllstoffen oder Verstärkungsstoffen sind Glasfasern und Wollastonit besonders bevorzugt, wobei Glasfasern ganz besonders bevorzugt sind. Im Falle eines laserabsorbierenden Bauteils bzw. laserabsorbierenden Hochvoltkomponente können auch Kohlenstofffasern als Füllstoff oder Verstärkungsstoff eingesetzt werden.

Bezüglich der Glasfasern unterscheidet der Fachmann gemäß **"http://de.wikipedia.org/wiki/Faser-Kunststoff-Verbund"** geschnittene Fasern, auch als Kurzfasern bezeichnet, mit einer Länge im Bereich von 0,1 bis 1 mm, Langfasern mit einer Länge im Bereich von 1 bis 50 mm und Endlosfasern mit einer Länge L > 50 mm. Kurzfasern werden vorzugsweise in der Spritzgusstechnik eingesetzt und können direkt mit einem Extruder verarbeitet werden. Langfasern können ebenfalls noch in Extrudern verarbeitet werden. Sie finden im großen Umfang Einsatz beim Faserspritzen. Langfasern werden häufig Duroplasten als Füllstoff zugemischt. Endlosfasern werden als Rovings oder Gewebe in faserverstärkten Kunststoffen eingesetzt. Erzeugnisse mit Endlosfasern erzielen die höchsten Steifigkeits- und Festigkeitswerte. Des Weiteren werden gemahlene Glasfasern angeboten, deren Länge nach der Vermahlung typischerweise im Bereich von 70 bis 200 µm liegt.

Erfindungsgemäß bevorzugt als Komponente C) einzusetzende Glasfasern sind geschnittene Langglasfasern mit einer mittels Laserbeugungs-Partikelgrößenanalyse (lasergranulometrische Messung bzw. Laserdiffraktometrie) gemäß **ISO 13320** zu bestimmenden mittleren Ausgangslänge im Bereich von 1 bis 50 mm, besonders bevorzugt im Bereich von 1 bis 10 mm, ganz besonders bevorzugt im Bereich von 2 bis 7 mm. Zu Laserbeugungs-Partikelgrößenbestimmung/Laserdiffraktometrie gemäß der Norm **ISO 13320** siehe:
**https://de.wikipedia.org/wiki/Laserbeugungs-Partikelgr%C3%B6%C3%9Fenanalyse**

Bevorzugte, als Komponente C) einzusetzende Glasfasern haben einen mittels Laserdiffraktometrie gemäß **ISO 13320** zu bestimmenden mittleren Faserdurchmesser im Bereich von 7 bis 18 µm, besonders bevorzugt im Bereich von 9 bis 15 µm.

Die als Komponente C) vorzugsweise einzusetzenden Glasfasern werden in einer bevorzugten Ausführungsform mit einem geeigneten Schlichtesystem oder einem Haftvermittler bzw. Haftvermittlersystem ausgerüstet. Bevorzugt wird ein Schlichtesystem bzw. ein Haftvermittler auf Silanbasis eingesetzt. Besonders bevorzugte Haftvermittler auf Silanbasis für die Behandlung der als Komponente C) vorzugsweise einzusetzenden Glasfasern sind Silanverbindungen der allgemeine Formel (II)

(X-(CH₂)_{q})ₖ-Si-(O-CrH₂ᵣ₊₁)₄₋ₖ (II)

worin
- X: für NH₂-, Carboxyl-, HO- oder steht, 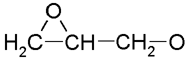
- q: in Formel (XI) für eine ganze Zahl von 2 bis 10, bevorzugt 3 bis 4 steht,
- r: in Formel (XI) für eine ganze Zahl von 1 bis 5, bevorzugt 1 bis 2 steht und
- k: in Formel (XI) für eine ganze Zahl von 1 bis 3, bevorzugt 1 steht.

Insbesondere bevorzugte Haftvermittler sind Silanverbindungen aus der Gruppe Aminopropyltrimethoxysilan, Aminobutyltrimethoxysilan, Aminopropyltriethoxysilan, Aminobutyltriethoxysilan sowie die entsprechenden Silane, welche als Substituent X eine Glycidyl- oder eine Carboxylgruppe enthalten, wobei Carboxylgruppen insbesondere ganz besonders bevorzugt sind.

Für die Ausrüstung der als Komponente C) vorzugsweise einzusetzenden Glasfasern wird der Haftvermittler, bevorzugt die Silanverbindungen gemäß Formel (II), bevorzugt in Mengen von 0,05 bis 2 Gew.-%, besonders bevorzugt in Mengen von 0,25 bis 1,5 Gew.-% und ganz besonders bevorzugt in Mengen von 0,5 bis 1 Gew.-%, jeweils bezogen auf 100 Gew.-% Komponente C), eingesetzt.

Die als Komponente C) vorzugsweise einzusetzenden Glasfasern können bedingt durch die Verarbeitung zur Zusammensetzung bzw. zum Erzeugnis in der Zusammensetzung bzw. im Erzeugnis kürzer sein, als die ursprünglich eingesetzten Glasfasern. So liegt der mittels hochauflösender Röntgencomputertomographie zu bestimmende arithmetische Mittelwert der Glasfaserlänge nach der Verarbeitung häufig nur noch im Bereich von 150 µm bis 300 µm.

Gemäß **"http://www.r-g.de/wiki/Glasfasern"** werden Glasfasern im Schmelzspinnverfahren (Düsenzieh-, Stabzieh- und Düsenblasverfahren) hergestellt. Beim Düsenziehverfahren fließt unter Ausnutzung der Schwerkraft die heiße Glasmasse durch hunderte Düsenbohrungen einer Platinspinnplatte. Die Elementarfäden können in unbegrenzter Länge mit einer Geschwindigkeit von 3 - 4 km/Minute gezogen werden.

Der Fachmann unterscheidet verschiedene Glasfasersorten, wovon hier beispielsweise einige gelistet sind:
- E-Glas, das meistverwendete Material mit optimalem Preis-Leistungsverhältnis (E-Glas von R&G) mit einer Zusammensetzung gemäß **https://www.r-g.de/wiki/Glasfasern** von 53-55 % SiO₂, 14-15 % Al₂O₃, 6-8% B₂O₃, 17-22% CaO, <5% MgO, <1% K₂O bzw. Na₂O und ca. 1% andere Oxide;
- H-Glas, Hohlglasfasern für reduziertes Gewicht (R&G Glashohlfasergewebe 160 g/m² und 216 g/m²);
- R, S-Glas, für erhöhte mechanische Anforderungen (S2-Glas von R&G);
- D-Glas, Borsilicatglas für erhöhte elektrische Anforderungen;
- C-Glas, mit erhöhter chemischer Widerstandsfähigkeit;
- Quarzglas, mit hoher Temperaturbeständigkeit.

Weitere Beispiele finden sich unter **"http://de.wikipedia.org/wiki/Glasfaser".** Für die Kunststoffverstärkung haben E-Glasfasern die größte Bedeutung erlangt. E steht für Elektro-Glas, da es ursprünglich vor allem in der Elektroindustrie eingesetzt wurde. Für die Produktion von E-Glas werden Glasschmelzen aus reinem Quarz mit Zusätzen aus Kalkstein, Kaolin und Borsäure hergestellt. Sie enthalten neben Siliziumdioxid unterschiedliche Mengen verschiedener Metalloxide. Die Zusammensetzung bestimmt die Eigenschaften der Produkte. Erfindungsgemäß bevorzugt wird wenigstens eine Sorte Glasfasern aus der Gruppe E-Glas, H-Glas, R,S-Glas, D-Glas, C-Glas und Quarzglas eingesetzt, besonders bevorzugt Glasfasern aus E-Glas.

Glasfasern aus E-Glas sind der am weitesten verbreitete Verstärkungswerkstoff. Die Festigkeitseigenschaften entsprechen denen von Metallen (z.B. Alu-Legierungen), wobei das spezifische Gewicht von E-Glasfasern enthaltenden Laminaten niedriger ist, als das der Metalle. E-Glasfasern sind unbrennbar, hitzefest bis ca. 400 °C und beständig gegen die meisten Chemikalien und Witterungseinflüsse.

Bevorzugt werden als Komponente C) ferner auch nadelförmige mineralische Füllstoffe eingesetzt. Unter nadelförmigen, mineralischen Füllstoffen wird erfindungsgemäß ein mineralischer Füllstoff mit stark ausgeprägtem nadelförmigen Charakter verstanden. Bevorzugt als Komponente C) einzusetzender nadelförmiger mineralischer Füllstoff ist Wollastonit. Bevorzugt weist der nadelförmige, mineralische Füllstoff ein mittels hochauflösender Röntgencomputertomographie zu bestimmendes Länge : Durchmesser - Verhältnis im Bereich von 2:1 bis 35:1, besonders bevorzugt im Bereich von 3:1 bis 19:1, insbesondere bevorzugt im Bereich von 4:1 bis 12:1 auf. Die mittels hochauflösender Röntgencomputertomographie zu bestimmende mittlere Teilchengröße der nadelförmigen, mineralischen Füllstoffe liegt bevorzugt bei kleiner 20 µm, besonders bevorzugt bei kleiner 15 µm, insbesondere bevorzugt bei kleiner 10 µm.

Bevorzugt wird als Komponente C) aber auch nicht-faserförmiges und nicht-geschäumtes gemahlenes Glas mit einer mittels Laserdiffraktometrie gemäß **ISO 13320** zu bestimmenden Teilchengrößenverteilung mit einem d90 im Bereich von 5 bis 250 µm eingesetzt, bevorzugt im Bereich von 10 bis 150 µm, besonders bevorzugt im Bereich von 15 bis 80 µm, ganz besonders bevorzugt im Bereich von 16 bis 25 µm. Bezüglich der d90-Werte, ihrer Bestimmung und ihrer Bedeutung sei auf Chemie Ingenieur Technik (72) S. 273-276, 3/2000, Wiley-VCH Verlags GmbH, Weinheim, 2000 verwiesen, wonach der d90-Wert diejenige Partikelgröße ist, unterhalb derer 90 % der Partikelmenge liegen.

Erfindungsgemäß bevorzugt ist das nicht-faserförmige und nicht-geschäumte gemahlene Glas von partikelförmiger, nicht zylindrischer Gestalt und hat ein mittels Laserdiffraktometrie gemäß **ISO 13320** zu bestimmendes Längen- zu Dickenverhältnis kleiner 5, bevorzugt kleiner als 3, besonders bevorzugt kleiner 2. Der Wert Null ist selbstverständlich ausgeschlossen.

Das als Komponente C) besonders bevorzugt einzusetzende nicht-geschäumte und nicht faserförmige gemahlene Glas ist zudem dadurch gekennzeichnet, dass es nicht die für faserförmiges Glas typische Glasgeometrie mit zylindrischem oder ovalen Querschnitt mit einem mittels Laserdiffraktometrie gemäß **ISO 13320** zu bestimmenden Längen- zu Durchmesserverhältnis (L/D-Verhältnis) größer 5 aufweist.

Das erfindungsgemäß als Komponente C) besonders bevorzugt einzusetzende nicht-geschäumte und nicht-faserförmige gemahlene Glas wird bevorzugt durch Mahlung von Glas mit einer Mühle, bevorzugt einer Kugelmühle und besonders bevorzugt mit anschließender Sichtung bzw. Siebung erhalten. Bevorzugte Ausgangsmaterialien für die Vermahlung des in einer Ausführungsform als Komponente C) einzusetzenden nichtfaserförmigem und nicht-geschäumten, gemahlenen Glas sind auch Glasabfälle, wie sie insbesondere bei der Herstellung von Glaserzeugnissen als unerwünschtes Nebenprodukt und / oder als nicht spezifikationsgerechtes Hauptprodukt (sogenannte Offspec-Ware) anfallen. Hierzu gehört insbesondere Abfall-, Recycling- und Bruchglas wie es insbesondere bei der Herstellung von Fenster- oder Flaschenglas, sowie bei der Herstellung von glashaltigen Füll- und Verstärkungsstoffen, insbesondere in Form von sogenannten Schmelzekuchen, anfallen kann. Das Glas kann gefärbt sein, wobei nichtgefärbtes Glas als Ausgangsmaterial zum Einsatz als Komponente C) bevorzugt ist.

### Komponenten D)

In bevorzugter Ausführungsform wird als Komponente D) wenigstens ein Flammschutzmittel eingesetzt. Bevorzugte **Flammschutzmittel** sind von Komponente C) verschiedene mineralische Flammschutzmittel, stickstoffhaltige Flammschutzmittel oder phosphorhaltige Flammschutzmittel.

Unter den mineralischen Flammschutzmitteln ist Magnesiumhydroxid besonders bevorzugt. Magnesiumhydroxid [CAS Nr. 1309-42-8] kann aufgrund seiner Herkunft und Herstellungsweise verunreinigt sein. Typische Verunreinigungen sind z.B. Silicium-, Eisen-, Calcium- und/oder Aluminium-haltige Spezies, die beispielsweise in Form von Oxiden in den Magnesiumhydroxid-Kristallen eingelagert sein können. Das als mineralisches Flammschutzmittel einzusetzende Magnesiumhydroxid kann unbeschlichtet oder aber mit einer Schlichte versehen sein. Vorzugsweise wird das als mineralisches Flammschutzmittel einzusetzende Magnesiumhydroxid mit Schlichten auf Basis von Stearaten oder Aminosiloxanen, besonders bevorzugt mit Aminosiloxanen versehen. Vorzugsweise als mineralisches Flammschutzmittel einzusetzendes Magnesiumhydroxid hat eine mittels Laserdiffraktometrie gemäß **ISO 13320** zu bestimmende mittlere Teilchengröße d50 im Bereich von 0,5 µm bis 6 µm, wobei ein d50 im Bereich von 0,7 µm bis 3,8 µm bevorzugt und ein d50 im Bereich von 1,0 µm bis 2,6 µm besonders bevorzugt ist.

Erfindungsgemäß als mineralisches Flammschutzmittel geeignete Magnesiumhydroxidtypen sind beispielsweise Magnifin^{®} H5IV der Martinswerk GmbH, Bergheim, Deutschland oder Hidromag^{®} Q2015 TC der Firma Penoles, Mexiko-Stadt, Mexico.

Bevorzugte stickstoffhaltige Flammschutzmittel sind die Reaktionsprodukte aus Trichlortriazin, Piperazin und Morpholin gemäß CAS Nr. 1078142-02-5, insbesondere MCA PPM Triazin HF der Fa. MCA Technologies GmbH, Biel-Benken, Schweiz, ferner Melamincyanurat und Kondensationsprodukte des Melamins, insbesondere Melem, Melam, Melon bzw. höherkondensierte Verbindungen dieses Typs. Bevorzugte anorganische stickstoffhaltige Verbindungen sind Ammoniumsalze.

Ferner können auch Salze aliphatischer und aromatischer Sulfonsäuren und mineralische Flammschutzadditive, insbesondere Aluminiumhydroxid oder Ca-Mg-Carbonat-Hydrate **(**DE-A 4 236 122**)** eingesetzt werden.

In Frage kommen für den Einsatz als Komponente D) ferner Flammschutzmittelsynergisten aus der Gruppe der sauerstoff- stickstoff- oder schwefelhaltigen Metallverbindungen. Bevorzugt sind dabei zinkfreie Verbindungen insbesondere Molybdänoxid, Magnesiumoxid, Magnesiumcarbonat, Calciumcarbonat, Calciumoxid, Titannitrid, Magnesiumnitrid, Calciumphosphat, Calciumborat, Magnesiumborat oder deren Mischungen.

In einer alternativen Ausführungsform können als Komponente D) aber auch - sofern es der Bedarf erfordert - zinkhaltige Verbindungen eingesetzt werden. Hierzu zählen bevorzugt Zinkoxid, Zinkborat, Zinkstannat, Zinkhydroxystannat, Zinksulfid und Zinknitrid, oder deren Mischungen.

Bevorzugte phosphorhaltige Flammschutzmittel sind organische Metallphosphinate, Aluminiumsalze der Phosphonsäure, roter Phosphor, anorganische Metallhypophosphite, Metallphosphonate, Derivate der 9,10-Dihydro-9-oxa-10-phosphaphenanthren-10-oxide (DOPO-Derivate), Resorcinol-bis-(diphenylphosphat) (RDP) einschließlich Oligomere, Bisphenol-A-bis-diphenylphosphat (BDP) einschließlich Oligomere, Melaminpyrophosphat, Melaminpolyphosphat, Melamin-poly(aluminiumphosphat), Melamin-poly(zinkphosphat) oder Phenoxyphosphazenoligomere und deren Mischungen.

Ein bevorzugtes organisches Metallphosphinat ist Aluminium-tris(diethylphosphinat). Ein bevorzugtes anorganisches Metallhypophosphit ist Aluminiumhypophosphit.

Weitere als Komponente D) einzusetzende Flammschutzmittel sind Kohlebildner, besonders bevorzugt Phenol-Formaldehydharze, Polycarbonate, Polyimide, Polysulfone, Polyethersulfone oder Polyetherketone sowie Antitropfmittel, insbesondere Tetrafluorethylenpolymerisate.

Die als Komponente D) einzusetzenden Flammschutzmittel können in Reinform, sowie über Masterbatche oder Kompaktate zugesetzt werden.

In einer alternativen Ausführungsform können als Flammschutzmittel aber auch - sofern der Bedarf es erfordert unter Berücksichtigung der Nachteile durch den Verlust der Halogenfreiheit der Flammschutzmittel - halogenhaltige Flammschutzmittel eingesetzt werden. Bevorzugte halogenhaltige Flammschutzmittel sind handelsübliche organische Halogenverbindungen, besonders bevorzugt Ethylen-1,2-bistetrabromphthalimid, Decabromdiphenylethan, Tetrabrombisphenol-A-epoxyoligomer, Tetrabrombisphenol-A-oligocarbonat, Tetrachlorbisphenol-A-oligocarbonat, Polypentabrombenzylacrylat, bromiertes Polystyrol oder bromierte Polyphenylenether, die alleine oder in Kombination mit Synergisten, insbesondere Antimontrioxid oder Antimontpentoxid, eingesetzt werden können, wobei unter den halogenhaltigen Flammschutzmitteln bromiertes Polystyrol besonders bevorzugt ist. Bromiertes Polystyrol wird dabei bevorzugt in Mengen im Bereich von 10 bis 30 Gew.-%, besonders bevorzugt in Mengen im Bereich von 15 bis 25 Gew.%, eingesetzt, jeweils bezogen auf die Gesamtzusammensetzung, wobei wenigstens eine der übrigen Komponenten soweit reduziert wird, dass die Summe aller Gewichtsprozente stets 100 ergibt.

Bromiertes Polystyrol ist in diversen Produktqualitäten kommerziell verfügbar. Beispiele hierfür sind z.B. Firemaster^{®} PBS64 der Fa. Lanxess, Köln, Deutschland sowie Saytex^{®} HP-3010 der Fa. Albemarle, Baton Rouge, USA.

Unter den als Komponente D) einzusetzenden Flammschutzmitteln sind Aluminiumtris(diethylphosphinat)] [CAS Nr. 225789-38-8] sowie die Kombination aus Aluminiumtris(diethylphosphinat) und Melaminpolyphosphat oder die Kombination aus Aluminiumtris(diethylphosphinat) und mindestens einem Aluminiumsalz der Phosphonsäure ganz besonders bevorzugt, wobei letztere Kombination insbesondere bevorzugt ist.

Aluminium-tris(diethylphosphinat)] [CAS Nr. 225789-38-8] bzw. die Kombinationen aus Aluminium-tris(diethylphosphinat) und Melaminpolyphosphat beziehungsweise aus Aluminium-tris(diethylphosphinat) und mindestens einem Aluminiumsalz der Phosphonsäure werden dabei bevorzugt zu 5 - 35 Gew.-%, besonders bevorzugt zu 10 - 30 Gew.-%, ganz besonders bevorzugt zu 15 - 25 Gew.-% eingesetzt, jeweils bezogen auf die Gesamtzusammensetzung, wobei wenigstens eine der übrigen Komponenten soweit reduziert wird, dass die Summe aller Gewichtsprozente stets 100 ergibt.

Im Falle der Kombinationen aus Aluminium-tris(diethylphosphinat) und Melaminpolyphosphat bzw. aus Aluminium-tris(diethylphosphinat) und mindestens einem Aluminiumsalz der Phosphonsäure liegt der Anteil an Aluminium-tris(diethylphosphinat) bevorzugt bei 40 - 90 Gewichtsteilen, besonders bevorzugt bei 50 - 80 Gewichtsteilen, ganz besonders bevorzugt bei 60 - 70 Gewichtsteilen, jeweils bezogen auf 100 Gewichtsteile der Kombination aus Aluminium-tris(diethylphosphinat) und Melaminpolyphosphat bzw. der Kombination aus Aluminium-tris(diethylphosphinat) und mindestens einem Aluminiumsalz der Phosphonsäure.

Als Komponente D) einzusetzendes Aluminium-tris(diethylphosphinat) kommt z.B. das Exolit^{®} OP1230 oder Exolit^{®} OP1240 der Fa. Clariant International Ltd. Muttenz, Schweiz infrage. Melaminpolyphosphat ist in diversen Produktqualitäten kommerziell verfügbar. Beispiele hierfür sind z.B. Melapur^{®} 200/70 der Fa. BASF, Ludwigshafen, Deutschland sowie Budit^{®} 3141 der Fa. Budenheim, Budenheim, Deutschland.

Bevorzugte Aluminiumsalze der Phosphonsäure sind ausgewählt aus der Gruppe
primäres Aluminiumphosphonat [Al(H₂PO₃)₃],
basisches Aluminiumphosphonat [Al(OH)H₂PO₃)₂·2H₂O],
Al₂(HPO₃)₃·x Al₂O₃·n H₂O mit x im Bereich von 2,27 bis 1 und n im Bereich von 0 bis 4,

   Al₂(HPO₃)₃ · (H₂O)_{q} (III)
mit q im Bereich von 0 bis 4, insbesondere Aluminiumphosphonattetrahydrat [Al₂(HPO₃)₃·4H₂O] oder sekundäres Aluminiumphosphonat [Al₂(HPO₃)₃],

   Al₂M_{z}(HPO₃)_{y}(OH)ᵥ · (H₂O)_{w} (IV)
worin M Alkalimetallion(en) bedeutet und z im Bereich von 0,01 bis 1,5, y im Bereich von 2,63 - 3,5, v im Bereich von 0 bis 2 und w im Bereich von 0 bis 4 liegt, und

   Al₂(HPO₃)ᵤ(H₂PO₃)ₜ · (H₂O)ₛ (V)
worin u im Bereich von 2 bis 2,99, t im Bereich von 2 bis 0,01 und s im Bereich von 0 bis 4 liegt,
wobei in Formel (IV) z, y und v sowie in Formel (V) u und t nur solche Zahlen annehmen können, dass das entsprechende Aluminiumsalz der Phosphonsäure als Ganzes ungeladen ist.

Bevorzugte Alkalimetalle M in Formel (IV) sind Natrium und Kalium.

Die beschriebenen Aluminiumsalze der Phosphonsäure können dabei einzeln oder im Gemisch eingesetzt werden.

Besonders bevorzugte Aluminiumsalze der Phosphonsäure werden ausgewählt aus der Gruppe
primäres Aluminiumphosphonat [Al(H₂PO₃)₃],
sekundäres Aluminiumphosphonat [Al₂(HPO₃)₃],
basisches Aluminiumphosphonat [Al(OH)H₂PO₃)₂·2H₂O],
Aluminiumphosphonattetrahydrat [Al₂(HPO₃)₃·4H₂O] und
Al₂(HPO₃)₃·x Al₂O₃·n H₂O mit x im Bereich von 2,27 bis 1 und n im Bereich von 0 bis 4.

Ganz besonders bevorzugt sind sekundäres Aluminiumphosphonat Al₂(HPO₃)₃ [CAS Nr. 71449-76-8] und sekundäres Aluminiumphosphonattetrahydrat Al₂(HPO₃)₃·4H₂O [CAS Nr. 156024-71-4], insbesondere bevorzugt ist sekundäres Aluminiumphosphonat Al₂(HPO₃)₃.

Die Herstellung erfindungsgemäß als Komponente D) einzusetzender Aluminiumsalze der Phosphonsäure ist zum Beispiel in WO 2013/083247 A1 beschrieben. Sie erfolgt üblicherweise durch Umsetzung einer Aluminiumquelle, bevorzugt Aluminiumisopropoxid, Aluminiumnitrat, Aluminiumchlorid oder Aluminiumhydroxid, mit einer Phosphorquelle, bevorzugt Phosphonsäure, Ammoniumphosphonat, Alkaliphosphonat, und wahlweise mit einem Templat in einem Lösungsmittel bei 20 bis 200°C während einer Zeitspannte von bis zu 4 Tagen. Aluminiumquelle und Phosphorquelle werden dazu vermischt, unter hydrothermalen Bedingungen oder am Rückfluss erhitzt, abfiltriert gewaschen und getrocknet. Bevorzugte Template dabei sind 1,6 Hexandiamin, Guanidincarbonat oder Ammoniak. Bevorzugtes Lösungsmittel ist Wasser.

### Komponente E)

Als Komponente E) wird wenigstens ein weiteres, von den Komponenten B) bis D) unterschiedliches, **Additiv** eingesetzt. Bevorzugte als Komponente E) einzusetzende Additive sind Antioxidantien, Thermostabilisatoren, UV-Stabilisatoren, Gammastrahlenstabilisatoren, Komponenten zur Verringerung der Wasseraufnahme bzw. Hydrolysestabilisatoren, Antistatika, Emulgatoren, Nukleierungsmittel, Weichmacher, Verarbeitungshilfsmittel, Schlagzähmodifikatoren, Gleit- und/oder Entformungsmittel, Komponenten zur Verringerung der Wasseraufnahme, Fließhilfsmittel oder Elastomermodifikatoren, kettenverlängernd wirkende Additive, von Komponenten B) verschiedene Farbmittel, im Falle von laserabsorbierenden Bauteilen bzw. Hochvoltkomponenten Laserabsorber. Die Additive können alleine oder in Mischung bzw. in Form von Masterbatchen eingesetzt werden.

Bevorzugte **Thermostabilisatoren** der Komponente E) sind sterisch gehinderte Phenole, insbesondere solche enthaltend mindestens eine 2,6 Di-tert.-butylphenyl-Gruppe und/oder 2- tert.-Butyl-6-methylphenyl-Gruppe, ferner Phosphite, Hypophosphite, insbesondere Natriumhypophosphit NaH₂PO₂, Hydrochinone, aromatische sekundäre Amine, substituierte Resorcine, Salicylate, Benzotriazole und Benzophenone, 3,3'-Thiodipropionsäureester sowie verschieden substituierte Vertreter dieser Gruppen oder deren Mischungen.

In einer Ausführungsform können als Thermostabilisatoren der Komponente E) auch Kupfersalze, vorzugsweise in Kombination mit Natriumhypophosphit NaH₂PO₂ eingesetzt werden. Bevorzugt wird als Kupfersalz Kupfer(I)iodid [CAS Nr. 7681-65-4] und/oder Kupfer(triphenylphosphino)iodid [CAS Nr. 47107-74-4] eingesetzt. Vorzugsweise werden die Kupfersalze in Kombination mit Natriumhypophosphit NaH₂PO₂ oder mit wenigstens einem Alkaliiodid eingesetzt. Bevorzugtes Alkaliiodid ist Kaliumiodid [CAS Nr. 7681-11-0].

Als Komponente E) einzusetzende Thermostabilisatoren werden vorzugsweise zu 0,01 bis 2 Massenanteilen, besonders bevorzugt zu 0,05 bis 1 Massenanteilen, jeweils bezogen auf 100 Massenanteile der Komponente A) eingesetzt.

Als Komponente E) einzusetzende **UV-Stabilisatoren** werden vorzugsweise substituierte Resorcine, Salicylate, Benzotriazole und Benzophenone, HALS-Derivate ("Hindered Amine Light Stabilizers") enthaltend mindestens eine 2,2,6,6-Tetramethyl-4-piperidyl-Einheit oder Benzophenone eingesetzt.

Als Komponente E) einzusetzende UV-Stabilisatoren werden vorzugsweise zu 0,01 bis 2 Massenanteilen, besonders bevorzugt zu 0,1 bis 1 Massenanteilen, jeweils bezogen auf 100 Massenanteile der Komponente A) eingesetzt.

Als Komponente E) einzusetzende und von Komponente B) verschiedene **Farbmittel** werden bevorzugt, anorganische Pigmente, insbesondere Ultramarinblau, Bismutvanadat, Eisenoxid, Titandioxid, Zinksulfid, Zinn-Titan-Zinkoxide [CAS Nr. 923954-49-8], weiterhin organische Farbmittel, bevorzugt Phthalocyanine, Chinacridone, Benzimidazole, insbesondere Ni-2-hydroxy-napthyl-benzimidazol [CAS Nr. 42844-93-9] und/oder Pyrimidin-azo-benzimidazol [CAS-Nr. 72102-84-2] und/oder Pigment Yellow 192 [CAS Nr. 56279-27-7], außerdem Perylene, Anthrachinone, insbesondere C.I. Solvent Yellow 163 [CAS Nr. 13676-91-0] eingesetzt, wobei diese Aufzählung nicht abschließend ist.

In einer Ausführungsform, vorzugsweise im Falle eines laserabsorbierenden Bauteils bzw. einer laserabsorbierenden Hochvoltkomponente, werden als Farbmittel auch Ruß oder Nigrosin eingesetzt.

Als Komponente E) einzusetzende **Nukleierungsmittel** werden bevorzugt Natrium- oder Calciumphenylphosphinat, Aluminiumoxid oder Siliziumdioxid sowie ganz besonders bevorzugt Talkum eingesetzt, wobei diese Aufzählung nicht abschließend ist.

Als Komponente E) einzusetzende **Fließhilfsmittel** werden bevorzugt Copolymerisate aus mindestens einem α-Olefin mit mindestens einem Methacrylsäurester oder Acrylsäureester eines aliphatischen Alkohols eingesetzt. Besonders bevorzugt sind dabei Copolymerisate, bei denen das α-Olefin aus Ethen und/oder Propen aufgebaut ist und der Methacrylsäurester oder Acrylsäureester als Alkoholkomponente lineare oder verzweigte Alkylgruppen mit 6 bis 20C-Atomen enthält. Ganz besonders bevorzugt ist Acrylsäure-(2-ethyl)-hexylester. Als Fließhilfsmittel geeignete Copolymerisate zeichnen sich neben der Zusammensetzung auch durch das niedrige Molekulargewicht aus. Dementsprechend sind für die erfindungsgemäß vor thermischem Abbau zu bewahrenden Zusammensetzungen vor allem Copolymerisate geeignet, die einen MFI-Wert gemessen bei 190°C und einer Belastung von 2,16 kg von mindestens 100 g / 10 min, bevorzugt von mindestens 150 g / 10 min, besonders bevorzugt von mindestens 300 g / 10 min aufweisen. Der MFI, Melt-Flow-Index, dient zur Charakterisierung des Flusses einer Schmelze eines Thermoplasten und unterliegt den Normen ISO 1133 oder ASTM D 1238. Insbesondere bevorzugt wird als Fließhilfsmittel ein Copolymerisat aus Ethen und Acrylsäure-(2-ethyl)-hexylester mit MFI 550 eingesetzt, bekannt als Lotryl^{®} 37EH550.

Als Komponente E) einzusetzende **kettenverlängernde Additive** werden bevorzugt di- oder mehrfunktionelle verzweigend oder kettenverlängernd wirkende Additive, enthaltend mindestens zwei verzweigend oder kettenverlängernd wirkende funktionelle Gruppen pro Molekül, eingesetzt. Als verzweigende bzw. kettenverlängende Additive werden niedermolekulare oder oligomere Verbindungen bevorzugt, die über mindestens zwei kettenverlängernd wirkende funktionelle Gruppen pro Molekül verfügen, welche mit primären und/oder sekundären Aminogruppen, und/oder Amidgruppen und/oder Carbonsäuregruppen reagieren können. Kettenverlängernd wirkende funktionelle Gruppen sind bevorzugt Isocyanate, Alkohole, blockierte Isocyanate, Epoxide, Maleinsäureanhydrid, Oxazoline, Oxazine, Oxazolone, wobei Epoxide bevorzugt sind.

Insbesondere bevorzugte di- oder mehrfunktionelle verzweigend oder kettenverlängernd wirkende Additive sind Diepoxide auf Basis Diglycidylether (Bisphenol und Epichlorhydrin), auf Basis von Aminepoxidharz (Anilin und Epichlorhydrin), auf Basis von Diglycidylester (cycloaliphatische Dicarbonsäuren und Epichlorhydrin) einzeln oder in Mischungen sowie 2,2-Bis[p-hydroxy-phenyl]-propan-diglycidylether, Bis-[p-(N-methyl-N-2,3-epoxy-propylamino)-phenyl]-methan sowie epoxidierte Fettsäureester des Glycerins, enthaltend mindestens zwei Epoxidgruppen pro Molekül.

Besonders bevorzugte di- oder mehrfunktionelle verzweigend oder kettenverlängernd wirkende Additive sind Glycidylether, ganz besonders bevorzugt Bisphenol A-Diglycidylether [CAS Nr. 98460-24-3] oder epoxidierte Fettsäureester des Glycerins, sowie auch ganz besonders bevorzugt epoxidiertes Sojaöl [CAS Nr. 8013-07-8] und/oder epoxidiertes Leinöl.

Bevorzugt als Komponente E) einzusetzende **Weichmacher** sind Phthalsäuredioctylester, Phthalsäuredibenzylester, Phthalsäurebutylbenzylester, Kohlenwasserstofföle oder N-(n-Butyl)benzolsulfonamid.

Bevorzugt als Komponente E) einzusetzende **Elastomermodifikatoren** umfassen u.a. ein oder mehrere Pfropfpolymerisate von

| | |
|---|---|
| E.1 | 5 bis 95 Gew.-%, vorzugsweise 30 bis 90 Gew.-%, wenigstens eines Vinylmonomeren und |
| E.2 | 95 bis 5 Gew.-%, vorzugsweise 70 bis 10 Gew.-% einer oder mehrerer Pfropfgrundlagen mit Glasübergangstemperaturen < 10°C, vorzugsweise < 0°C, besonders bevorzugt < -20°C, wobei die Gewichtsprozente sich auf 100 Gew.-% Elastomermodifikator beziehen. |

Die Pfropfgrundlage E.2 hat im allgemeinen eine mittels Laserdiffraktometrie gemäß ISO 13320 zu bestimmende mittlere Teilchengröße d50-Wert von 0,05 bis 10 µm, vorzugsweise 0,1 bis 5 µm, besonders bevorzugt 0,2 bis 1 µm.

Monomere zu E.1 sind vorzugsweise Gemische aus

| | |
|---|---|
| E.1.1 | 50 bis 99 Gew.-% Vinylaromaten und/oder kernsubstituierten Vinylaromaten, insbesondere Styrol, α-Methylstyrol, p-Methylstyrol, p-Chlorstyrol, und/oder Meth- |
| | acrylsäure-(C₁-C₈)-Alkylester, insbesondere. Methylmethacrylat, Ethylmethacrylat) und |
| E.1.2 | 1 bis 50 Gew.-% Vinylcyanide, insbesondere ungesättigte Nitrile wie Acrylnitril und Methacrylnitril, und/oder (Meth)Acrylsäure-(C₁-C₈)-alkylester, insbesondere Methylmethacrylat, Glycidylmethacrylat, n-Butylacrylat, t-Butylacrylat, und/oder Derivate ,insbesondere Anhydride und Imide ungesättigter Carbonsäuren, insbesondere Maleinsäureanhydrid oder N-Phenyl-Maleinimid, wobei die Gewichtsprozente sich auf 100 Gew.-% Elastomermodifikator beziehen. |

Bevorzugte Monomere E.1.1 sind auszuwählen aus mindestens einem der Monomere Styrol, α-Methylstyrol und Methylmethacrylat, bevorzugte Monomere E.1.2 sind ausgewählt aus mindestens einem der Monomere Acrylnitril, Maleinsäureanhydrid, Glycidylmethacrylat und Methylmethacrylat. Besonders bevorzugte Monomere sind E.1.1 Styrol und E.1.2 Acrylnitril.

Für die in den Elastomermodifikatoren einzusetzenden Pfropfpolymerisate geeignete Pfropfgrundlagen E.2 sind beispielsweise Dienkautschuke, EPDM-Kautschuke, also solche auf Basis Ethylen/Propylen und gegebenenfalls Dien, ferner Acrylat-, Polyurethan-, Silikon-, Chloropren und Ethylen/Vinylacetat-Kautschuke. EPDM steht für Ethylen-Propylen-DienKautschuk.

Bevorzugte Pfropfgrundlagen E.2 sind Dienkautschuke, insbesondere auf Basis Butadien, Isopren etc. oder Gemische von Dienkautschuken oder Copolymerisate von Dienkautschuken oder deren Gemischen mit weiteren copolymerisierbaren Monomeren, insbesondere gemäß E.1.1 und E.1.2, mit der Maßgabe, dass die Glasübergangstemperatur der Komponente E.2 bei <10°C, vorzugsweise bei <0°C, besonders bevorzugt bei <-10°C liegt.

Besonders bevorzugte Pfropfgrundlagen E.2 sind ABS-Polymerisate (Emulsions-, Masse- und Suspensions-ABS) wobei ABS für Acrylnitril-Butadien-Styrol steht, wie sie z. B. in der DE-A 2 035 390 oder in der DE-A 2 248 242 bzw. in Ullmann, Enzyklopädie der Technischen Chemie, Bd. 19 (1980), S. 277 - 295 beschrieben sind. Der Gelanteil der Pfropfgrundlage E.2 beträgt bevorzugt mindestens 30 Gew.-%, besonders bevorzugt mindestens 40 Gew.-% (in Toluol gemessen).

Die als Komponente E) einzusetzenden Elastomermodifikatoren bzw. Pfropfpolymerisate werden durch radikalische Polymerisation, bevorzugt durch Emulsions-, Suspensions-, Lösungs- oder Massepolymerisation, insbesondere durch Emulsions- oder Massepolymerisation hergestellt.

Besonders geeignete Pfropfkautschuke sind auch ABS-Polymerisate, die durch Redox-Initiierung mit einem Initiatorsystem aus organischem Hydroperoxid und Ascorbinsäure gemäß US-A 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten auch solche Produkte verstanden, die durch (Co)Polymerisation der Pfropfmonomere in Gegenwart der Pfropfgrundlage gewonnen werden und bei der Aufarbeitung mit anfallen.

Ebenfalls geeignete Acrylatkautschuke basieren auf Pfropfgrundlagen E.2 die vorzugsweise Polymerisate aus Acrylsäurealkylestern, gegebenenfalls mit bis zu 40 Gew.-%, bezogen auf E.2 anderen polymerisierbaren, ethylenisch ungesättigten Monomeren. Zu den bevorzugten polymerisierbaren Acrylsäureestern gehören C₁-C₈-Alkylester, vorzugsweise Methyl-, Ethyl-, Butyl-, n-Octyl- und 2-Ethylhexylester; Halogenalkylester, vorzugsweise Halogen-C₁-C₈-alkyl-ester, wie Chlorethylacrylat, Glycidylester sowie Mischungen dieser Monomeren. Dabei sind Pfropfpolymerisate mit Butylacrylat als Kern und Methylmethacrylaten als Schale, insbesondere. Paraloid^{®} EXL2300, Fa. Dow Corning Corporation, Midland Michigan, USA, besonders bevorzugt.

Zur Vernetzung können alternativ zu den ethylenisch ungesättigten Monomeren Monomere mit mehr als einer polymerisierbaren Doppelbindung copolymerisiert werden. Bevorzugte vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, bevorzugt Ethylenglykoldimethacrylat, Allylmethacrylat; mehrfach ungesättigte heterocyclische Verbindungen, bevorzugt Trivinyl- und Triallylcyanurat; polyfunktionelle Vinylverbindungen, bevorzugt Di- und Trivinylbenzole; aber auch Triallylphosphat und Diallylphthalat.

Besonders bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Ganz besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5 Gew.-%, insbesondere 0,05 bis 2 Gew.-%, bezogen auf die Pfropfgrundlage E.2.

Bei cyclischen vernetzenden Monomeren mit mindestens 3 ethylenisch ungesättigten Gruppen ist es vorteilhaft, die Menge auf unter 1 Gew.-% der Pfropfgrundlage E.2 zu beschränken.

Bevorzugte "andere" polymerisierbare, ethylenisch ungesättigte Monomere, die neben den Acrylsäureestern gegebenenfalls zur Herstellung der Pfropfgrundlage E.2 dienen können, sind Acrylnitril, Styrol, α-Methylstyrol, Acrylamide, Vinyl-C₁-C₆-alkylether, Methylmethacrylat, Glycidylmethacrylat, Butadien. Bevorzugte Acrylatkautschuke als Pfropfgrundlage E.2 sind Emulsionspolymerisate, die einen Gelgehalt von mindestens 60 Gew.-% aufweisen.

Weitere bevorzugt geeignete Pfropfgrundlagen gemäß E.2 sind Silikonkautschuke mit pfropfaktiven Stellen, wie sie in den DE-A 3 704 657**,** DE-A 3 704 655**,** DE-A 3 631 540 und DE-A 3 631 539 beschrieben werden.

Bevorzugte Pfropfpolymerisate mit einem Silikonanteil sind solche, die Methylmethacrylat oder Styrol-Acrylnitril als Schale und ein Silikon/Acrylat-Pfropf als Kern aufweisen. Bevorzugt als Schale einzusetzendes Styrol-Acrylnitril ist Metablen^{®} SRK200. Bevorzugt als Schale einzusetzendes Methylmethacrylat ist Metablen^{®} S2001 oder Metablen^{®} S2030 oder Metablen^{®} SX-005. Besonders bevorzugt wird Metablen^{®} S2001 eingesetzt. Die Produkte mit dem Handelsnamen Metablen^{®} sind erhältlich bei Mitsubishi Rayon Co., Ltd., Tokio, Japan.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, bevorzugt Ethylenglykoldimethacrylat, Allylmethacrylat; mehrfach ungesättigte heterocyclische Verbindungen, bevorzugt Trivinyl- und Triallylcyanurat; polyfunktionelle Vinylverbindungen, bevorzugt Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5 Gew.-%, insbesondere 0,05 bis 2 Gew.-%, bezogen auf die Pfropfgrundlage E.2.

Bei cyclischen vernetzenden Monomeren mit mindestens 3 ethylenisch ungesättigten Gruppen ist es vorteilhaft, die Menge auf unter 1 Gew.-% der Pfropfgrundlage E.2 zu beschränken.

Bevorzugte "andere" polymerisierbare, ethylenisch ungesättigte Monomere, die neben den Acrylsäureestern gegebenenfalls zur Herstellung der Pfropfgrundlage E.2 dienen können, sind Acrylnitril, Styrol, α-Methylstyrol, Acrylamide, Vinyl-C₁-C₆-alkylether, Methylmethacrylat, Glycidylmethacrylat, Butadien. Bevorzugte Acrylatkautschuke als Pfropfgrundlage E.2 sind Emulsionspolymerisate, die einen Gelgehalt von mindestens 60 Gew.-% aufweisen.

Neben Elastomermodifikatoren, die auf Pfropfpolymeren beruhen, können ebenfalls nicht auf Pfropfpolymeren basierende Elastomermodifikatoren eingesetzt werden, die Glasübergangstemperaturen < 10 °C, vorzugsweise < 0 °C, besonders bevorzugt < -20 °C aufweisen. Bevorzugt gehören hierzu Elastomere mit einer Blockcopolymerstruktur sowie weiterhin thermoplastisch aufschmelzbare Elastomere, insbesondere EPM-, EPDM- und/oder SEBS-Kautschuke (EPM = Ethylen-Propylen-Copolymer, EPDM = Ethylen-Propylen-Dien-Kautschuk und SEBS = Styrol-Ethen-Buten-Styrol Copolymer).

Als Komponente E) einzusetzende **Gleit- und/oder Entformungsmittel** sind bevorzugt langkettige Fettsäuren, insbesondere Stearinsäure oder Behensäure, deren Salze, insbesondere Ca- oder Zn-Stearat, sowie deren Esterderivate, insbesondere solche auf Basis von Pentaerythritol, insbesondere Fettsäureester des Pentaerythritols oder Amidderivate, insbesondere Ethylen-bis-stearylamid, Montanwachse sowie niedermolekulare Polyethylen- bzw. Polypropylenwachse.

Montanwachse im Sinne der vorliegenden Erfindung sind Mischungen aus geradkettigen, gesättigten Carbonsäuren mit Kettenlängen von 28 bis 32 C-Atomen.

Erfindungsgemäß werden besonders bevorzugt Gleit- und/oder Entformungsmittel aus der Gruppe der Ester gesättigter oder ungesättigter aliphatischer Carbonsäuren mit 8 bis 40 C-Atomen mit aliphatischen gesättigten Alkoholen oder Amide von Aminen mit 2 bis 40 C-Atomen mit ungesättigten aliphatischen Carbonsäuren mit 8 bis 40 C-Atomen bzw. statt jeweils der Carbonsäuren Metallsalze gesättigter oder ungesättigter aliphatischer Carbonsäuren mit 8 bis 40 C-Atomen eingesetzt.

Ganz besonders bevorzugt als Komponente E) einzusetzende Gleit- und/oder Entformungsmittel sind auszuwählen aus der Gruppe Pentaerythritoltetrastearat [CAS Nr. 115-83-3], Ethylen-bis-stearylamid, Calciumstearat und Ethylenglycoldimontanat. Insbesondere bevorzugt wird Calciumstearat [CAS Nr. 1592-23-0] oder Ethylen-bis-stearylamid [CAS Nr. 110-30-5] eingesetzt. Insbesondere besonders bevorzugt wird Ethylen-bis-stearylamid (Loxiol^{®} EBS von Emery Oleochemicals) eingesetzt.

Als Komponente E) bevorzugt einzusetzende **Hydrolysestabilisatoren** bzw. **Komponenten zur Verringerung der Wasseraufnahme** sind bevorzugt Polyester, wobei Polybutylenterepthalat und/oder Polyethylenterephthalat bevorzugt sind und Polyethylenterephthalat ganz besonders bevorzugt ist. Die Polyester werden dabei bevorzugt in Konzentrationen von 5 bis 20 Gew.-% und besonders bevorzugt in Konzentrationen von 7 bis 15 Gew-% eingesetzt, jeweils bezogen auf die gesamte Polymerzusammensetzung und mit der Maßgabe, dass die Summe aller Gewichtsprozente der Polymerzusammensetzung stets 100 Gew.-% ergibt.

Im Falle eines laserabsorbierenden Bauteils bzw. laserabsorbierenden Hochvoltkomponente kann als Komponente E) wenigstens ein **Laserabsorber** ausgewählt aus der Gruppe Antimontrioxid, Zinnoxid, Zinnorthophosphat, Bariumtitanat, Aluminiumoxid, Kupferhydroxyphosphat, Kupferorthophosphat, Kaliumkupferdiphosphat, Kupferhydroxid, Antimonzinnoxid, Bismuttrioxid und Antrachinon eingesetzt werden. Besonders bevorzugt sind Zinnoxid, Antimontrioxid oder Antimonzinnoxid. Ganz besonders bevorzugt ist Antimontrioxid.

Der Laserabsorber, insbesondere das Antimontrioxid, kann direkt als Pulver oder in Form von Masterbatchen eingesetzt werden. Bevorzugte Masterbatche sind solche auf Basis von Polyamid und/oder Polyolefinen, bevorzugt Polyethylen. Ganz besonders bevorzugt wird Antimontrioxid in Form eines Polyamid 6-basierten Masterbatches eingesetzt.

Der Laserabsorber kann einzeln oder als Gemisch mehrerer Laserabsorber eingesetzt werden.

Laserabsorber können Laserlicht einer bestimmten Wellenlänge absorbieren. In der Praxis liegt diese Wellenlänge im Bereich von 157 nm bis 10,6 µm. Beispiele für Laser dieser Wellenlängen sind in WO2009/003976 A1 beschrieben. Bevorzugt werden Nd:YAG Laser, mit denen Wellenlängen von 1064, 532, 355 und 266 nm realisiert werden können, und CO₂-Laser eingesetzt.

### Lasertransparente Hochvoltkomponenten

Erfindungsgemäß bevorzugt sind **Hochvoltkomponenten,** insbesondere Hochvoltkomponenten für die Elektromobilität, basierend auf Polymerzusammensetzungen enthaltend
A) auf 100 Massenanteile wenigstens eines Polyamids, vorzugsweise Polyamid 6 oder Polyamid 66, insbesondere Polyamid 6,
B) 0,01 bis 5 Massenanteile 10,10'-Oxy-bis-12H-phthaloperin-12-on, und
C) 1 bis 150 Massenanteile wenigstens eines Füll- und Verstärkungsstoffs auszuwählen aus der Gruppe Glaskugeln oder Voll- oder Hohlglaskugeln, oder Glasfasern, oder gemahlenes Glas, amorphes Quarzglas, Aluminium-Borsilikatglas mit einem Alkaligehalt 1% (E-Glas), amorphe Kieselsäure, Quarzmehl, Calciumsilicat, Calciummetasilicat, Magnesiumcarbonat, Kaolin, calciniertes Kaolin, Kreide, Kyanit, gepulverter oder gemahlener Quarz, Glimmer, Phlogopit, Bariumsulfat, Feldspat, Wollastonit, Montmorillonit, Pseudoböhmit der Formel AlO(OH), Magnesiumcarbonat und Talkum, insbesondere Glasfasern
mit der Maßgabe eines Farbabstands ΔE <20 von den L*a*b* Koordinaten einer mit "2" beginnenden Farbnummer der RAL-Farbtabelle und einer Lasertransparenz bei einer Wellenlänge von 980 nm von mindestens 10%.

Erfindungsgemäß bevorzugt sind **Hochvoltkomponenten,** insbesondere Hochvoltkomponenten für die Elektromobilität, basierend auf Polymerzusammensetzungen enthaltend
A) auf 100 Massenanteile wenigstens eines Polyamids, vorzugsweise Polyamid 6 oder Polyamid 66, insbesondere Polyamid 6,
B) 0,01 bis 5 Massenanteile 10,10'-Oxy-bis-12H-phthaloperin-12-on,
C) 1 bis 150 Massenanteile wenigstens eines Füll- und Verstärkungsstoffs, vorzugsweise auszuwählen aus der Gruppe Glaskugeln oder Voll- oder Hohlglaskugeln, oder Glasfasern, oder gemahlenes Glas, amorphes Quarzglas, Aluminium-Borsilikatglas mit einem Alkaligehalt 1% (E-Glas), amorphe Kieselsäure, Quarzmehl, Calciumsilicat, Calciummetasilicat, Magnesiumcarbonat, Kaolin, calciniertes Kaolin, Kreide, Kyanit, gepulverter oder gemahlener Quarz, Glimmer, Phlogopit, Bariumsulfat, Feldspat, Wollastonit, Montmorillonit, Pseudoböhmit der Formel AlO(OH), Magnesiumcarbonat und Talkum, insbesondere Glasfasern, und
D) 3 bis 100 Massenanteile wenigstens eines Flammschutzadditivs, vorzugsweise auszuwählen aus mineralischen Flammschutzmitteln, stickstoffhaltigen Flammschutzmitteln oder phosphorhaltigen Flammschutzmitteln
mit der Maßgabe eines Farbabstands ΔE <20 von den L*a*b* Koordinaten einer mit "2" beginnenden Farbnummer der RAL-Farbtabelle und einer Lasertransparenz bei einer Wellenlänge von 980 nm von mindestens 10%.

Erfindungsgemäß bevorzugt sind **Hochvoltkomponenten,** insbesondere Hochvoltkomponenten für die Elektromobilität, basierend auf Polymerzusammensetzungen enthaltend
A) auf 100 Massenanteile wenigstens eines Polyamids, vorzugsweise Polyamid 6 oder Polyamid 66, insbesondere Polyamid 6,
B) 0,01 bis 5 Massenanteile 10,10'-Oxy-bis-12H-phthaloperin-12-on,
C) 1 bis 150 Massenanteile wenigstens eines Füll- und Verstärkungsstoffs, vorzugsweise auszuwählen aus der Gruppe Glaskugeln oder Voll- oder Hohlglaskugeln, oder Glasfasern, oder gemahlenes Glas, amorphes Quarzglas, Aluminium-Borsilikatglas mit einem Alkaligehalt 1% (E-Glas), amorphe Kieselsäure, Quarzmehl, Calciumsilicat, Calciummetasilicat, Magnesiumcarbonat, Kaolin, calciniertes Kaolin, Kreide, Kyanit, gepulverter oder gemahlener Quarz, Glimmer, Phlogopit, Bariumsulfat, Feldspat, Wollastonit, Montmorillonit, Pseudoböhmit der Formel AlO(OH), Magnesiumcarbonat und Talkum, insbesondere Glasfasern, und
E) 0,01 bis 2 Massenanteile wenigstens eines Thermostabilisators, vorzugsweise auszuwählen aus der Gruppe der sterisch gehinderten Phenole, insbesondere solche enthaltend mindestens eine 2,6 Di-tert.-butylphenyl-Gruppe und/oder 2- tert.-butyl-6-methylphenyl-Gruppe, ferner der Phosphite, der Hypophosphite, insbesondere Natriumhypophosphit NaH₂PO₂, der Hydrochinone, der aromatischen sekundären Amine und der 3,3'-Thiodipropionsäureester
mit der Maßgabe eines Farbabstands ΔE <20 von den L*a*b* Koordinaten einer mit "2" beginnenden Farbnummer der RAL-Farbtabelle und einer Lasertransparenz bei einer Wellenlänge von 980 nm von mindestens 10%.

Erfindungsgemäß bevorzugt sind **Hochvoltkomponenten,** insbesondere Hochvoltkomponenten für die Elektromobilität, basierend auf Polymerzusammensetzungen enthaltend
A) auf 100 Massenanteile wenigstens eines Polyamids, vorzugsweise Polyamid 6 oder Polyamid 66, insbesondere Polyamid 6,
B) 0,01 bis 5 Massenanteile 10,10'-Oxy-bis-12H-phthaloperin-12-on,
C) 1 bis 150 Massenanteile wenigstens eines Füll- und Verstärkungsstoffs, vorzugsweise auszuwählen aus der Gruppe Glaskugeln oder Voll- oder Hohlglaskugeln, oder Glasfasern, oder gemahlenes Glas, amorphes Quarzglas, Aluminium-Borsilikatglas mit einem Alkaligehalt 1% (E-Glas), amorphe Kieselsäure, Quarzmehl, Calciumsilicat, Calciummetasilicat, Magnesiumcarbonat, Kaolin, calciniertes Kaolin, Kreide, Kyanit, gepulverter oder gemahlener Quarz, Glimmer, Phlogopit, Bariumsulfat, Feldspat, Wollastonit, Montmorillonit, Pseudoböhmit der Formel AlO(OH), Magnesiumcarbonat und Talkum, insbesondere Glasfasern,
D) 3 bis 100 Massenanteile wenigstens eines Flammschutzadditivs, vorzugsweise auszuwählen aus mineralischen Flammschutzmitteln, stickstoffhaltigen Flammschutzmitteln oder phosphorhaltigen Flammschutzmitteln, und
E) 0,01 bis 2 Massenanteile wenigstens eines Thermostabilisators, vorzugsweise auszuwählen aus der Gruppe der sterisch gehinderten Phenole, insbesondere solche enthaltend mindestens eine 2,6 Di-tert.-butylphenyl-Gruppe und/oder 2- tert.-butyl-6-methylphenyl-Gruppe, ferner der Phosphite, der Hypophosphite, insbesondere Natriumhypophosphit NaH₂PO₂, der Hydrochinone, der aromatischen sekundären Amine und der 3,3'-Thiodipropionsäureester
mit der Maßgabe eines Farbabstands ΔE <20 von den L*a*b* Koordinaten einer mit "2" beginnenden Farbnummer der RAL-Farbtabelle und einer Lasertransparenz bei einer Wellenlänge von 980 nm von mindestens 10%.

Erfindungsgemäß besonders bevorzugt sind Hochvoltkomponenten, insbesondere Hochvoltkomponenten für die Elektromobilität, mit der Maßgabe eines Farbabstands ΔE <20 von den L*a*b* Koordinaten einer mit "2" beginnenden Farbnummer der RAL-Farbtabelle und einer Lasertransparenz/Lasertransmission bei einer Wellenlänge von 980 nm von mindestens 20%, besonders bevorzugt im Bereich von 25 bis 90%. Zur Messung der Lasertransparenz siehe oben und insbesondere K.D. Feddersen "Laserdurchstrahlschweißen - die Lösung für nicht lösbare Verbindungen", Österreichische Kunststoffzeitschrift 1/2 2018, Seiten 50 - 52**.**

### Laserabsorbierende Hochvoltkomponenten

Erfindungsgemäß bevorzugt sind Hochvoltkomponenten, insbesondere Hochvoltkomponenten für die Elektromobilität, basierend auf Polymerzusammensetzungen enthaltend
A) auf 100 Massenanteile wenigstens eines Polyamids, vorzugsweise Polyamid 6 oder Polyamid 66, insbesondere Polyamid 6,
B) 0,01 bis 5 Massenanteile 10,10'-Oxy-bis-12H-phthaloperin-12-on, und
E) wenigstens einen **Laserabsorber** ausgewählt aus der Gruppe Antimontrioxid, Zinnoxid, Zinnorthophosphat, Bariumtitanat, Aluminiumoxid, Kupferhydroxyphosphat, Kupferorthophosphat, Kaliumkupferdiphosphat, Kupferhydroxid, Antimonzinnoxid, Bismuttrioxid und Antrachinon
mit der Maßgabe eines Farbabstands ΔE <20 von den L*a*b* Koordinaten einer mit "2" beginnenden Farbnummer der RAL-Farbtabelle. Besonders bevorzugte Laserabsorber sind Zinnoxid, Antimontrioxid oder Antimonzinnoxid. Ganz besonders bevorzugt ist Antimontrioxid.

Erfindungsgemäß bevorzugt sind Hochvoltkomponenten, insbesondere Hochvoltkomponenten für die Elektromobilität, basierend auf Polymerzusammensetzungen enthaltend
A) auf 100 Massenanteile wenigstens eines Polyamids, vorzugsweise Polyamid 6 oder Polyamid 66, insbesondere Polyamid 6,
B) 0,01 bis 5 Massenanteile 10,10'-Oxy-bis-12H-phthaloperin-12-on,
C) 1 bis 150 Massenanteile wenigstens eines Füll- und Verstärkungsstoffs auszuwählen aus der Gruppe Glaskugeln oder Voll- oder Hohlglaskugeln, oder Glasfasern, oder gemahlenes Glas, amorphes Quarzglas, Aluminium-Borsilikatglas mit einem Alkaligehalt 1% (E-Glas), amorphe Kieselsäure, Quarzmehl, Calciumsilicat, Calciummetasilicat, Magnesiumcarbonat, Kaolin, calciniertes Kaolin, Kreide, Kyanit, gepulverter oder gemahlener Quarz, Glimmer, Phlogopit, Bariumsulfat, Feldspat, Wollastonit, Montmorillonit, Pseudoböhmit der Formel AlO(OH), Magnesiumcarbonat und Talkum, insbesondere Glasfasern, und
E) wenigstens einen **Laserabsorber** ausgewählt aus der Gruppe Antimontrioxid, Zinnoxid, Zinnorthophosphat, Bariumtitanat, Aluminiumoxid, Kupferhydroxyphosphat, Kupferorthophosphat, Kaliumkupferdiphosphat, Kupferhydroxid, Antimonzinnoxid, Bismuttrioxid und Antrachinon,
mit der Maßgabe eines Farbabstands ΔE <20 von den L*a*b* Koordinaten einer mit "2" beginnenden Farbnummer der RAL-Farbtabelle.

Erfindungsgemäß bevorzugt sind Hochvoltkomponenten, insbesondere Hochvoltkomponenten für die Elektromobilität, basierend auf Polymerzusammensetzungen enthaltend
A) auf 100 Massenanteile wenigstens eines Polyamids, vorzugsweise Polyamid 6 oder Polyamid 66, insbesondere Polyamid 6,
B) 0,01 bis 5 Massenanteile 10,10'-Oxy-bis-12H-phthaloperin-12-on,
C) 1 bis 150 Massenanteile wenigstens eines Füll- und Verstärkungsstoffs, vorzugsweise auszuwählen aus der Gruppe Glaskugeln oder Voll- oder Hohlglaskugeln, oder Glasfasern, oder gemahlenes Glas, amorphes Quarzglas, Aluminium-Borsilikatglas mit einem Alkaligehalt 1% (E-Glas), amorphe Kieselsäure, Quarzmehl, Calciumsilicat, Calciummetasilicat, Magnesiumcarbonat, Kaolin, calciniertes Kaolin, Kreide, Kyanit, gepulverter oder gemahlener Quarz, Glimmer, Phlogopit, Bariumsulfat, Feldspat, Wollastonit, Montmorillonit, Pseudoböhmit der Formel AlO(OH), Magnesiumcarbonat und Talkum, insbesondere Glasfasern, und
D) 3 bis 100 Massenanteile wenigstens eines Flammschutzadditivs, vorzugsweise auszuwählen aus mineralischen Flammschutzmitteln, stickstoffhaltigen Flammschutzmitteln oder phosphorhaltigen Flammschutzmitteln, und
E) wenigstens einen **Laserabsorber** ausgewählt aus der Gruppe Antimontrioxid, Zinnoxid, Zinnorthophosphat, Bariumtitanat, Aluminiumoxid, Kupferhydroxyphosphat, Kupferorthophosphat, Kaliumkupferdiphosphat, Kupferhydroxid, Antimonzinnoxid, Bismuttrioxid und Antrachinon,
mit der Maßgabe eines Farbabstands ΔE <20 von den L*a*b* Koordinaten einer mit "2" beginnenden Farbnummer der RAL-Farbtabelle.

### Verfahren

Die vorliegende Erfindung betrifft zudem ein Verfahren zur Herstellung der in den Hochvoltkomponenten, insbesondere in Hochvoltkomponenten für die Elektromobilität, einzusetzenden Polymerzusammensetzungen, die einen Farbabstand ΔE <20 von den L*a*b* Koordinaten einer mit "2" beginnenden Farbnummer der RAL-Farbtabelle, bevorzugt ein ΔE <10, besonders bevorzugt ΔE <5 und eine Lasertransparenz bei einer Wellenlänge von 980 nm von mindestens 10% aufweisen, indem man A) wenigstens ein Polyamid und B) 10,10'-Oxy-bis-12H-phthaloperin-12-on sowie gegebenenfalls wenigstens eine der weiteren Komponenten C), D) oder E) in wenigstens einem Mischwerkzeug miteinander mischt, wobei E) nicht für einen Laserabsorber, insbesondere nicht für einen Laserabsorber gemäß der oben definierten Komponente E), steht.

Vorzugsweise werden beim erfindungsgemäßen Verfahren auf 100 Massenanteile wenigstens eines Polyamids 0,01 bis 5 Massenanteile 10,10'-Oxy-bis-12H-phthaloperin-12-on eingesetzt. Vorzugsweise weisen die Hochvoltkomponenten nach dem erfindungsgemäßen Verfahren eine Lasertransparenz bei einer Wellenlänge von 980 nm von mindestens 20%, besonders bevorzugt im Bereich von 25 bis 90%, auf.

Die vorliegende Erfindung betrifft zudem ein Verfahren zur Herstellung von Hochvoltkomponenten, insbesondere von Hochvoltkomponenten für die Elektromobilität, die einen Farbabstand ΔE <20 von den L*a*b* Koordinaten einer mit "2" beginnenden Farbnummer der RAL-Farbtabelle, bevorzugt ein ΔE <10, besonders bevorzugt ΔE <5 eine Lasertransparenz bei einer Wellenlänge von 980 nm von mindestens 10% aufweisen, indem die Polymerzusammensetzungen im Spritzguss, einschließlich der Sonderverfahren GIT (Gasinjektionstechnik), WIT (Wasserinjektionstechnik) und PIT (Projektilinjektionstechnik), in Extrusionsverfahren, einschließlich in der Profil-Extrusion, oder durch Blasformen weiter verarbeitet werden. Gegebenenfalls werden die Polymerzusammensetzungen vor dem Weiterverarbeiten zu Strängen ausgetragen, bis zur Granulierfähigkeit abgekühlt, gegebenenfalls getrocknet und granuliert. In einer Ausführungsform wird die Polymerzusammensetzung als Granulat zwischengelagert. In diesem Fall wird kein Laserabsorber, insbesondere kein Laserabsorber gemäß der oben definierten Komponente E), eingesetzt. Vorzugsweise wird eine Lasertransparenz von mindestens 33%, besonders bevorzugt im Bereich von 40 bis 90%, erzielt.

Entsprechende Verfahren gelten auch für die Herstellung von Hochvoltkomponenten, wobei auf 100 Massenanteile wenigstens eines Polyamids 0,01 bis 3 Massenanteile 10,10'-Oxy-bis-12H-phthaloperin-12-on eingesetzt werden und ein Farbabstand ΔE <20 von den L*a*b* Koordinaten einer mit "2" beginnenden Farbnummer der RAL-Farbtabelle, bevorzugt ein ΔE <10, besonders bevorzugt ΔE <5, und eine Lasertransparenz von mindestens 10% erzielt wird indem kein Laserabsorber als Komponente E) eingesetzt wird. Vorzugsweise wird eine Lasertransparenz bei einer Wellenlänge von 980 nm von mindestens 20%, besonders bevorzugt im Bereich von 25 bis 90%, erzielt.

Insbesondere betrifft die Erfindung ein Verfahren zur Herstellung von Hochvoltkomponenten, insbesondere von Hochvoltkomponenten für die Elektromobilität, die einen Farbabstand ΔE <20 von den L*a*b* Koordinaten einer mit "2" beginnenden Farbnummer der RAL-Farbtabelle, bevorzugt ein ΔE <10, besonders bevorzugt ΔE <5, und eine Lasertransparenz bei einer Wellenlänge von 980 nm von mindestens 10% aufweisen, indem man A) wenigstens ein Polyamid und B) 10,10'-Oxy-bis-12H-phthaloperin-12-on, vorzugsweise auf 100 Massenanteile wenigstens eines Polyamids 0,01 bis 5 Massenanteile 10,10'-Oxy-bis-12H-phthaloperin-12-on, miteinander zu Polymerzusammensetzungen mischt, zu Strängen austrägt, bis zur Granulierfähigkeit abkühlt, trocknet und granuliert und die Polymerzusammensetzungen anschließend im Spritzguss, einschließlich der Sonderverfahren GIT (Gasinjektionstechnik), WIT (Wasserinjektionstechnik) und PIT (Projektilinjektionstechnik), in Extrusionsverfahren, einschließlich in der Profil-Extrusion, oder durch Blasformen, weiter verarbeitet wobei kein Laserabsorber als Komponente E) insbesondere kein Laserabsorber gemäß der oben definierten Komponente E), eingesetzt wird.

Zur Klarstellung sei angemerkt, dass vom Rahmen der vorliegenden Erfindung alle im Rahmen der Zusammensetzungen oder Hochvoltkomponenten aufgeführten allgemeinen oder in Vorzugsbereichen genannten Definitionen und Parameter in beliebigen Kombinationen von den erfindungsgemäßen Verfahren umfasst sind.

Unabhängig von der Verfahrensvariante ist der Laserschweißprozess stark abhängig von den Materialeigenschaften der beiden Fügepartner. Der Grad der Lasertransparenz (LT) des durchstrahlten Teils beeinflusst direkt die Prozessgeschwindigkeit durch die pro Zeit einbringbare Energiemenge. Teilkristalline Thermoplaste haben in der Regel eine geringere Lasertransparenz durch ihre inhärente Mikrostruktur, meist in Form von Spheruliten. Diese streuen das eingestrahlte Laserlicht stärker als die innere Struktur eines rein amorphen Thermoplasten: Rückwärtsstreuung führt zu einer verminderten Gesamtenergiemenge in Transmission, diffuse (Seitwärts-)Streuung führt oftmals zu einer Aufweitung des Laserstrahls und somit Verlust in der Schweißpräzision. Eine teilkristalline Morphologie ist zwar allgemein hinderlich für eine hohe Lasertransparenz, sie bietet aber Vorteile bei anderen Eigenschaften. So sind teilkristalline Werkstoffe auch oberhalb der Glastemperatur mechanisch belastbar und besitzen im Allgemeinen eine bessere Chemikalienbeständigkeit als amorphe Werkstoffe. Schnell kristallisierende Werkstoffe bieten darüber hinaus in der Verarbeitung Vorteile, insbesondere eine schnelle Entformbarkeit und damit kurze Zykluszeiten. Wünschenswert ist daher die Kombination aus Teilkristallinität, schneller Kristallisation und hoher Lasertransparenz. Unter der Maßgabe dass einerseits die erfindungsgemäß herzustellenden Erzeugnisse, Hochvoltkomponenten sowie Hochvoltkomponenten für die Elektromobilität einen Farbabstand ΔE <20 von den L*a*b* Koordinaten einer mit "2" beginnenden Farbnummer der RAL-Farbtabelle, als auch eine Lasertransparenz von mindestens 10% aufweisen, hat die Auswahl weiterer Komponenten C) Füll- oder Verstärkungsstoffe, D) Flammschutzadditiv und E) Thermostabilisator sowie gegebenenfalls weiterer Additive zu erfolgen.

Erfindungsgemäß bevorzugt ist ein Verfahren zur Herstellung von Hochvoltkomponenten, insbesondere von Hochvoltkomponenten für die Elektromobilität, die einen Farbabstand ΔE <20 von den L*a*b* Koordinaten einer mit "2" beginnenden Farbnummer der RAL-Farbtabelle, bevorzugt ein ΔE <10, besonders bevorzugt ΔE <5, und eine Lasertransparenz bei einer Wellenlänge von 980 nm von mindestens 10% aufweisen, indem man A) wenigstens ein Polyamid und B) 10,10'-Oxy-bis-12H-phthaloperin-12-on miteinander zu Polymerzusammensetzungen mischt, zu Strängen austrägt, bis zur Granulierfähigkeit abkühlt, trocknet und granuliert und die Polymerzusammensetzungen anschließend im Spritzguss, einschließlich der Sonderverfahren GIT (Gasinjektionstechnik), WIT (Wasserinjektionstechnik) und PIT (Projektilinjektionstechnik), in Extrusionsverfahren, einschließlich in der Profil-Extrusion, oder durch Blasformen, weiter verarbeitet, wobei
A) auf 100 Massenanteile wenigstens eines Polyamids, vorzugsweise Polyamid 6 oder Polyamid 66, insbesondere Polyamid 6,
B) 0,01 bis 5 Massenanteile 10,10'-Oxy-bis-12H-phthaloperin-12-on, und
C) 1 bis 150 Massenanteile wenigstens eines Füll- und Verstärkungsstoffs auszuwählen aus der Gruppe Glaskugeln oder Voll- oder Hohlglaskugeln, oder Glasfasern, oder gemahlenes Glas, amorphes Quarzglas, Aluminium-Borsilikatglas mit einem Alkaligehalt 1% (E-Glas), amorphe Kieselsäure, Quarzmehl, Calciumsilicat, Calciummetasilicat, Magnesiumcarbonat, Kaolin, calciniertes Kaolin, Kreide, Kyanit, gepulverter oder gemahlener Quarz, Glimmer, Phlogopit, Bariumsulfat, Feldspat, Wollastonit, Montmorillonit, Pseudoböhmit der Formel AlO(OH), Magnesiumcarbonat und Talkum, insbesondere Glasfasern, eingesetzt werden, ohne dass ein Laserabsorber als Komponente E) eingesetzt wird.

Vorzugsweise wird eine Lasertransparenz von mindestens 20%, besonders bevorzugt im Bereich von 25 bis 90%, erzielt.

Erfindungsgemäß bevorzugt ist ein Verfahren zur Herstellung von Hochvoltkomponenten, insbesondere von Hochvoltkomponenten für die Elektromobilität, die einen Farbabstand ΔE <20 von den L*a*b* Koordinaten einer mit "2" beginnenden Farbnummer der RAL-Farbtabelle, bevorzugt ein ΔE <10, besonders bevorzugt ΔE <5, und eine Lasertransparenz bei einer Wellenlänge von 980 nm von mindestens 10% aufweisen, indem man
A) auf 100 Massenanteile wenigstens eines Polyamids, vorzugsweise Polyamid 6 oder Polyamid 66, insbesondere Polyamid 6,
B) 0,01 bis 5 Massenanteile 10,10'-Oxy-bis-12H-phthaloperin-12-on,
C) 1 bis 150 Massenanteile wenigstens eines Füll- und Verstärkungsstoffs, vorzugsweise auszuwählen aus der Gruppe Glaskugeln oder Voll- oder Hohlglaskugeln, oder Glasfasern, oder gemahlenes Glas, amorphes Quarzglas, Aluminium-Borsilikatglas mit einem Alkaligehalt 1% (E-Glas), amorphe Kieselsäure, Quarzmehl, Calciumsilicat, Calciummetasilicat, Magnesiumcarbonat, Kaolin, calciniertes Kaolin, Kreide, Kyanit, gepulverter oder gemahlener Quarz, Glimmer, Phlogopit, Bariumsulfat, Feldspat, Wollastonit, Montmorillonit, Pseudoböhmit der Formel AlO(OH), Magnesiumcarbonat und Talkum, insbesondere Glasfasern, und
D) 3 bis 100 Massenanteile wenigstens eines Flammschutzadditivs, vorzugsweise auszuwählen aus mineralischen Flammschutzmitteln, stickstoffhaltigen Flammschutzmitteln oder phosphorhaltigen Flammschutzmitteln,
miteinander zu Polymerzusammensetzungen mischt, zu Strängen austrägt, bis zur Granulierfähigkeit abkühlt, trocknet und granuliert und die Polymerzusammensetzungen anschließend im Spritzguss, einschließlich der Sonderverfahren GIT (Gasinjektionstechnik), WIT (Wasserinjektionstechnik) und PIT (Projektilinjektionstechnik), in Extrusionsverfahren, einschließlich in der Profil-Extrusion, oder durch Blasformen, weiter verarbeitet, ohne dass ein Laserabsorber als Komponente E) eingesetzt wird.

Erfindungsgemäß bevorzugt ist ein Verfahren zur Herstellung lasertransparenter Hochvoltkomponenten, insbesondere von Hochvoltkomponenten für die Elektromobilität, die einen Farbabstand ΔE <20 von den L*a*b* Koordinaten einer mit "2" beginnenden Farbnummer der RAL-Farbtabelle, bevorzugt ein ΔE <10, besonders bevorzugt ΔE <5, und eine Lasertransparenz bei einer Wellenlänge von 980 nm von mindestens 10% aufweisen, indem man
A) auf 100 Massenanteile wenigstens eines Polyamids, vorzugsweise Polyamid 6 oder Polyamid 66, insbesondere Polyamid 6,
B) 0,01 bis 5 Massenanteile 10,10'-Oxy-bis-12H-phthaloperin-12-on,
C) 1 bis 150 Massenanteile wenigstens eines Füll- und Verstärkungsstoffs, vorzugsweise auszuwählen aus der Gruppe Glaskugeln oder Voll- oder Hohlglaskugeln, oder Glasfasern, oder gemahlenes Glas, amorphes Quarzglas, Aluminium-Borsilikatglas mit einem Alkaligehalt 1% (E-Glas), amorphe Kieselsäure, Quarzmehl, Calciumsilicat, Calciummetasilicat, Magnesiumcarbonat, Kaolin, calciniertes Kaolin, Kreide, Kyanit, gepulverter oder gemahlener Quarz, Glimmer, Phlogopit, Bariumsulfat, Feldspat, Wollastonit, Montmorillonit, Pseudoböhmit der Formel AlO(OH), Magnesiumcarbonat und Talkum, insbesondere Glasfasern, und
E) 0,01 bis 2 Massenanteile wenigstens eines Thermostabilisators, vorzugsweise auszuwählen aus der Gruppe der sterisch gehinderten Phenole, insbesondere solche enthaltend mindestens eine 2,6 Di-tert.-butylphenyl-Gruppe und/oder 2- tert.-butyl-6-methylphenyl-Gruppe, ferner der Phosphite, der Hypophosphite, insbesondere Natriumhypophosphit NaH₂PO₂, der Hydrochinone, der aromatischen sekundären Amine und der 3,3'-Thiodipropionsäureester,
miteinander zu Polymerzusammensetzungen mischt, zu Strängen austrägt, bis zur Granulierfähigkeit abkühlt, trocknet und granuliert und die Polymerzusammensetzungen anschließend im Spritzguss, einschließlich der Sonderverfahren GIT (Gasinjektionstechnik), WIT (Wasserinjektionstechnik) und PIT (Projektilinjektionstechnik), in Extrusionsverfahren, einschließlich in der Profil-Extrusion, oder durch Blasformen, weiter verarbeitet, ohne dass ein Laserabsorber als Komponente E) eingesetzt wird.

Erfindungsgemäß bevorzugt ist ein Verfahren zur Herstellung lasertransparenter Hochvoltkomponenten, insbesondere von Hochvoltkomponenten für die Elektromobilität, die einen Farbabstand ΔE <20 von den L*a*b* Koordinaten einer mit "2" beginnenden Farbnummer der RAL-Farbtabelle, bevorzugt ein ΔE <10, besonders bevorzugt ΔE <5, und eine Lasertransparenz bei einer Wellenlänge von 980 nm von mindestens 10% aufweisen, indem man
A) auf 100 Massenanteile wenigstens eines Polyamids, vorzugsweise Polyamid 6 oder Polyamid 66, insbesondere Polyamid 6,
B) 0,01 bis 5 Massenanteile 10,10'-Oxy-bis-12H-phthaloperin-12-on,
C) 1 bis 150 Massenanteile wenigstens eines Füll- und Verstärkungsstoffs, vorzugsweise auszuwählen aus der Gruppe Glaskugeln oder Voll- oder Hohlglaskugeln, oder Glasfasern, oder gemahlenes Glas, amorphes Quarzglas, Aluminium-Borsilikatglas mit einem Alkaligehalt 1% (E-Glas), amorphe Kieselsäure, Quarzmehl, Calciumsilicat, Calciummetasilicat, Magnesiumcarbonat, Kaolin, calciniertes Kaolin, Kreide, Kyanit, gepulverter oder gemahlener Quarz, Glimmer, Phlogopit, Bariumsulfat, Feldspat, Wollastonit, Montmorillonit, Pseudoböhmit der Formel AlO(OH), Magnesiumcarbonat und Talkum, insbesondere Glasfasern,
D) 3 bis 100 Massenanteile wenigstens eines Flammschutzadditivs, vorzugsweise auszuwählen aus mineralischen Flammschutzmitteln, stickstoffhaltigen Flammschutzmitteln oder phosphorhaltigen Flammschutzmitteln, und
E) 0,01 bis 2 Massenanteile wenigstens eines Thermostabilisators, vorzugsweise auszuwählen aus der Gruppe der sterisch gehinderten Phenole, insbesondere solche enthaltend mindestens eine 2,6 Di-tert.-butylphenyl-Gruppe und/oder 2- tert.-butyl-6-methylphenyl-Gruppe, ferner der Phosphite, der Hypophosphite, insbesondere Natriumhypophosphit NaH₂PO₂, der Hydrochinone, der aromatischen sekundären Amine und der 3,3'-Thiodipropionsäureester,
miteinander zu Polymerzusammensetzungen mischt, zu Strängen austrägt, bis zur Granulierfähigkeit abkühlt, trocknet und granuliert und die Polymerzusammensetzungen anschließend im Spritzguss, einschließlich der Sonderverfahren GIT (Gasinjektionstechnik), WIT (Wasserinjektionstechnik) und PIT (Projektilinjektionstechnik), in Extrusionsverfahren, einschließlich in der Profil-Extrusion, oder durch Blasformen, weiter verarbeitet, ohne dass ein Laserabsorber als Komponente E) eingesetzt wird.

Bevorzugt weisen die Hochvoltkomponenten bzw. Hochvoltkomponenten für die Elektromobilität eine Lasertransparenz bei einer Wellenlänge von 980 nm von mindestens 20%, insbesondere im Bereich von 25 bis 90% auf, weshalb kein Laserabsorber, insbesondere kein Laserabsorber gemäß der oben definierten Komponente E), eingesetzt wird.

Zur Klarstellung sei angemerkt, dass vom Rahmen der vorliegenden Erfindung alle im Rahmen der Polymerzusammensetzungen oder Hochvoltkomponenten aufgeführten allgemeinen oder in Vorzugsbereichen genannten Definitionen und Parameter in beliebigen Kombinationen von den erfindungsgemäßen Verfahren umfasst sind.

### Hochvoltkomponenten

Die vorliegende Erfindung betrifft zudem Hochvoltkomponenten, insbesondere Hochvoltkomponenten für die Elektromobilität, die einen Farbabstand ΔE <20 von den L*a*b* Koordinaten einer mit "2" beginnenden Farbnummer der RAL-Farbtabelle, bevorzugt ein ΔE <10, besonders bevorzugt ΔE <5, und eine Lasertransparenz von mindestens 10% aufweisen, erhältlich durch die oben beschriebenen Polymerzusammensetzungen durch Spritzguss, einschließlich der Sonderverfahren GIT (Gasinjektionstechnik), WIT (Wasserinjektionstechnik) und PIT (Projektilinjektionstechnik), durch Extrusionsverfahren, einschließlich in der Profil-Extrusion, oder durch Blasformen weiter verarbeitet werden, ohne dass ein Laserabsorber, insbesondere kein Laserabsorber gemäß der oben definierten Komponente E), eingesetzt wird. Die Lasertransparenz wird im Falle der Hochvoltkomponenten gemessen bei 980 nm an einem 2mm dicken Formkörper. Vorzugsweise beträgt diese mindestens 20%.

Vorzugsweise weisen die Polyamid basierten Hochvoltkomponenten, insbesondere die Hochvoltkomponenten für die Elektromobilität, eine Lasertransparenz bei einer Wellenlänge von 980 nm von mindestens 20%, besonders bevorzugt im Bereich von 25 bis 90%, auf. Bevorzugt werden als Polyamid Polyamid 6 oder Polyamid 66 eingesetzt.

Im Falle, dass laserintransparente Hochvoltkomponenten, insbesondere Hochvoltkomponenten für die Elektromobilität gewünscht werden, wird als Komponente E) wenigstens ein **Laserabsorber** ausgewählt aus der Gruppe Antimontrioxid, Zinnoxid, Zinnorthophosphat, Bariumtitanat, Aluminiumoxid, Kupferhydroxyphosphat, Kupferorthophosphat, Kaliumkupferdiphosphat, Kupferhydroxid, Antimonzinnoxid, Bismuttrioxid und Antrachinon eingesetzt. Besonders bevorzugt sind Zinnoxid, Antimontrioxid oder Antimonzinnoxid. Ganz besonders bevorzugt ist Antimontrioxid.

Alternativ können im Rahmen der vorliegenden Erfindung sowohl in den laserabsorbierenden Hochvoltkomponenten, in den erfindungsgemäßen Zusammensetzungen sowie bei den erfindungsgemäßen Verfahren und Verwendungen als Laserabsorber Titandioxid, Ruß, SiO₂, metallhaltige Verbindungen, insbesondere Kupferhydroxidphosphat oder Kupferphosphat eingesetzt werden. Siehe: DE-A 198 14 298**,** DE 10 2004 051 246 A1**.** Bevorzugt wird der als Additiv E) einzusetzende Laserabsorber zu 0,01 bis 80 Massenanteilen, besonders bevorzugt zu 0,05 bis 50 Massenanteilen, ganz besonders bevorzugt zu 0,1 bis 30 Massenanteilen jeweils bezogen auf 100 Massenanteile der Komponente A) eingesetzt.

Zur Klarstellung sei angemerkt, dass vom Rahmen der vorliegenden Erfindung alle im Rahmen der Polymerzusammensetzungen aufgeführten allgemeinen oder in Vorzugsbereichen genannten Definitionen und Parameter in beliebigen Kombinationen von den erfindungsgemäßen Hochvoltkomponenten bzw. Hochvoltkomponenten für die Elektromobilität umfasst sind.

Bevorzugte Hochvoltkomponenten, insbesondere Hochvoltkomponenten für die Elektromobilität, aber auch lasertransparente bzw. lasertransmittierende Hochvoltkomponenten kommen im elektrischen Antriebsstrang und/oder im Batteriesystem zum Einsatz. Besonders bevorzugte Hochvoltkomponenten sind Abdeckungen für Elektrik oder Elektronik, Steuergeräte, Abdeckungen / Gehäuse für Sicherungen, Relais, Batteriezellenmodule, Sicherungshalter, Sicherungsstecker, Anschlussklemmen, Kabelhalterungen oder Ummantelungen, insbesondere Ummantelungen von Hochvoltstromschienen und Hochvoltstromverteilerschienen (engl. "bus bar").

### Verwendungen

Die vorliegende Erfindung betrifft aber auch die Verwendung von 10,10'-Oxy-bis-12H-phthaloperin-12-on zur Herstellung von Polyamid basierten Erzeugnissen mit der Maßgabe eines Farbabstands ΔE <20 von den L*a*b* Koordinaten einer mit "2" beginnenden Farbnummer der RAL-Farbtabelle aufweisen, bevorzugt ein ΔE <10, besonders bevorzugt ein ΔE <5, und einer Lasertransparenz von mindestens 10%; siehe obige Ausführungen unter der Überschrift Orange, die auf die hier beanspruchten Verwendungen anzuwenden sind. Die Lasertransparenz wird am Spritzgusserzeugnis gemessen bei einer Wellenlänge von 980 nm an einem 2mm dicken Formkörper. Vorzugsweise beträgt diese mindestens 20%, besonders bevorzugt liegt diese im Bereich von 25 bis 90%.

Vorzugsweise betrifft die vorliegende Erfindung die Verwendung von 10,10'-Oxy-bis-12H-phthaloperin-12-on zur Herstellung von Polyamid basierten Hochvoltkomponenten mit der Maßgabe eines Farbabstands ΔE <20 von den L*a*b* Koordinaten einer mit "2" beginnenden Farbnummer der RAL-Farbtabelle, bevorzugt ein ΔE <10, besonders bevorzugt ein ΔE <5 und einer Lasertransparenz bei einer Wellenlänge von 980 nm von mindestens 10%.

Besonders bevorzugt betrifft die vorliegende Erfindung die Verwendung von 10,10'-Oxy-bis-12H-phthaloperin-12-on zur Herstellung von Polyamid basierten Hochvoltkomponenten für die Elektromobilität mit der Maßgabe eines Farbabstands ΔE <20 von den L*a*b* Koordinaten einer mit "2" beginnenden Farbnummer der RAL-Farbtabelle, bevorzugt ein ΔE <10, besonders bevorzugt ΔE <5 und einer Lasertransparenz bei einer Wellenlänge von 980 nm von mindestens 10%.

Im Falle einer Verwendung von 10,10'-Oxy-bis-12H-phthaloperin-12-on zur Herstellung laserintransparenter oder laserabsorbierender Polymerzusammensetzungen oder Hochvoltkomponenten, insbesondere Hochvoltkomponenten für die Elektromobilität, wird als Komponente E) wenigstens ein **Laserabsorber** ausgewählt aus der Gruppe Antimontrioxid, Zinnoxid, Zinnorthophosphat, Bariumtitanat, Aluminiumoxid, Kupferhydroxyphosphat, Kupferorthophosphat, Kaliumkupferdiphosphat, Kupferhydroxid, Antimonzinnoxid, Bismuttrioxid und Antrachinon eingesetzt. Besonders bevorzugt sind Zinnoxid, Antimontrioxid oder Antimonzinnoxid. Ganz besonders bevorzugt ist Antimontrioxid.

Alternativ können im Rahmen der vorliegenden Erfindung in den laserabsorbierenden Hochvoltkomponenten als Laserabsorber Titandioxid, Ruß, SiO₂, metallhaltige Verbindungen, insbesondere Kupferhydroxidphosphat oder Kupferphosphat eingesetzt werden. Siehe: DE-A 198 14 298**,** DE 10 2004 051 246 A1**.** Bevorzugt wird der als Additiv E) einzusetzende Laserabsorber zu 0,01 bis 80 Massenanteilen, besonders bevorzugt zu 0,05 bis 50 Massenanteilen, ganz besonders bevorzugt zu 0,1 bis 30 Massenanteilen jeweils bezogen auf 100 Massenanteile der Komponente A) eingesetzt.

Aktuell gibt es noch keine Norm, auf deren Basis eine Messung zur Lasertransparenz erfolgen muss. Die Bestimmung der Lasertransmission erfolgt daher im Rahmen der vorliegenden Erfindung bei einer Wellenlänge von 1064 nm mittels einer thermoelektrischen Leistungsmessung. Die Messgeometrie kann wie folgt dargestellt werden: Von einem Laserstrahl (diodengepumpter Nd-YAG-Laser mit einer Wellenlänge von 1064 nm, FOBA DP50) mit einer Gesamtleistung von 2 Watt wird mittels eines Strahlteilers (Typ SQ2 nichtpolarisierender Strahlteiler von Fa. Laser-optik GmbH) ein Referenzstrahl im Winkel 90° mit 1 Watt Leistung abgeteilt. Dieser trifft auf den Referenzsensor. Der den Strahlteiler passierende Teil des ursprünglichen Strahls stellt den Messstrahl mit ebenfalls 1 Watt Leistung dar. Dieser wird durch eine Modenblende (5.0) hinter dem Strahlteiler auf einen Fokus mit Durchmesser 0,18mm fokussiert. In einem Abstand von 80 mm unterhalb des Fokus wird der Lasertransparenz(LT)-Messsensor positioniert. Die Testplatte wird in einem Abstand von 2 mm oberhalb des LT-Messsensors positioniert. Erfindungsgemäß bevorzugt handelt es sich dabei um spritzgegossene Testplatten mit den Abmessungen 60•60•2 mm³, mit Kantenanguss. Es wird in der Plattenmitte (Schnittpunkt der beiden Diagonalen) gemessen. Die gesamte Messdauer beträgt 30 s, wobei das Messergebnis in den letzten 5s ermittelt wird. Die Signale von Referenz- und Messsensor werden zeitgleich erfasst. Der Start der Messung erfolgt zeitgleich mit dem Einlegen der Probe. Die Transmission und damit die Lasertransparenz (LT) ergibt sich aus folgender Formel: $LT = {Signal}_{Messsensor} {/ Signal}_{Referenzsensor} \times 100 %$

Durch diese Messweise werden Schwankungen der Laseranlage und subjektive Ablesefehler ausgeschlossen. Für jede Platte wird der LT-Mittelwert aus mindestens fünf Messungen gebildet. Die Mittelwertbildung wird für jedes Material an 10 Platten durchgeführt. Aus den Mittelwerten der Einzelplattenmessungen wird schließlich der Mittelwert sowie die Standardabweichung für das zu untersuchende Material errechnet.

Unabhängig von der Verfahrensvariante ist der Laserschweißprozess stark abhängig von den Materialeigenschaften der beiden Fügepartner. Der Grad der Lasertransparenz (LT) des durchstrahlten Teils beeinflusst direkt die Prozessgeschwindigkeit durch die pro Zeit einbringbare Energiemenge. Teilkristalline Thermoplaste haben in der Regel eine geringere Lasertransparenz durch ihre inhärente Mikrostruktur, meist in Form von Spheruliten. Diese streuen das eingestrahlte Laserlicht stärker als die innere Struktur eines rein amorphen Thermoplasten: Rückwärtsstreuung führt zu einer verminderten Gesamtenergiemenge in Transmission, diffuse (Seitwärts-)Streuung führt oftmals zu einer Aufweitung des Laserstrahls und somit Verlust in der Schweißpräzision. Eine teilkristalline Morphologie ist zwar allgemein hinderlich für eine hohe Lasertransparenz, sie bietet aber Vorteile bei anderen Eigenschaften. So sind teilkristalline Werkstoffe auch oberhalb der Glastemperatur mechanisch belastbar und besitzen im Allgemeinen eine bessere Chemikalienbeständigkeit als amorphe Werkstoffe. Schnell kristallisierende Werkstoffe bieten darüber hinaus in der Verarbeitung Vorteile, insbesondere eine schnelle Entformbarkeit und damit kurze Zykluszeiten. Wünschenswert ist daher die Kombination aus Teilkristallinität, schneller Kristallisation und hoher Lasertransparenz. Unter der Maßgabe dass einerseits die aus den Polymerzusammensetzungen herzustellenden Erzeugnisse, Hochvoltkomponenten sowie Hochvoltkomponenten für die Elektromobilität einen Farbabstand ΔE <20 von den L*a*b* Koordinaten einer mit "2" beginnenden Farbnummer der RAL-Farbtabelle, als auch eine Lasertransparenz von mindestens 10% aufweisen, hat die Auswahl weiterer Komponenten C) Füll- oder Verstärkungsstoffe, D) Flammschutzadditiv und E) Thermostabilisator sowie gegebenenfalls weiterer Additive zu erfolgen.

Erfindungsgemäß bevorzugt ist die Verwendung von 10,10'-Oxy-bis-12H-phthaloperin-12-on zur Herstellung von lasertransparenten, Polyamid basierten Erzeugnissen, wobei
A) auf 100 Massenanteile wenigstens eines Polyamids, vorzugsweise Polyamid 6 oder Polyamid 66, insbesondere Polyamid 6,
B) 0,01 bis 5 Massenanteile 10,10'-Oxy-bis-12H-phthaloperin-12-on, und
C) 1 bis 150 Massenanteile wenigstens eines Füll- und Verstärkungsstoffs auszuwählen aus der Gruppe Glaskugeln oder Voll- oder Hohlglaskugeln, oder Glasfasern, oder gemahlenes Glas, amorphes Quarzglas, Aluminium-Borsilikatglas mit einem Alkaligehalt 1% (E-Glas), amorphe Kieselsäure, Quarzmehl, Calciumsilicat, Calciummetasilicat, Magnesiumcarbonat, Kaolin, calciniertes Kaolin, Kreide, Kyanit, gepulverter oder gemahlener Quarz, Glimmer, Phlogopit, Bariumsulfat, Feldspat, Wollastonit, Montmorillonit, Pseudoböhmit der Formel AlO(OH), Magnesiumcarbonat und Talkum, insbesondere Glasfasern, eingesetzt werden,
mit der Maßgabe eines Farbabstands ΔE <20 von den L*a*b* Koordinaten einer mit "2" beginnenden Farbnummer der RAL-Farbtabelle, bevorzugt ein ΔE <10, besonders bevorzugt ΔE <5, und einer Lasertransparenz bei einer Wellenlänge von 980 nm von mindestens 10%, wobei kein Laserabsorber, insbesondere kein Laserabsorber gemäß der oben definierten Komponente E), eingesetzt wird. Vorzugsweise wird eine Lasertransparenz von mindestens 20%, besonders bevorzugt im Bereich von 25 bis 90%, erzielt.

Erfindungsgemäß bevorzugt ist die Verwendung von 10,10'-Oxy-bis-12H-phthaloperin-12-on zur Herstellung von lasertransparenten, Polyamid basierten Erzeugnissen, wobei
A) auf 100 Massenanteile wenigstens eines Polyamids, vorzugsweise Polyamid 6 oder Polyamid 66, insbesondere Polyamid 6,
B) 0,01 bis 5 Massenanteile 10,10'-Oxy-bis-12H-phthaloperin-12-on,
C) 1 bis 150 Massenanteile wenigstens eines Füll- und Verstärkungsstoffs, vorzugsweise auszuwählen aus der Gruppe Glaskugeln oder Voll- oder Hohlglaskugeln, oder Glasfasern, oder gemahlenes Glas, amorphes Quarzglas, Aluminium-Borsilikatglas mit einem Alkaligehalt 1% (E-Glas), amorphe Kieselsäure, Quarzmehl, Calciumsilicat, Calciummetasilicat, Magnesiumcarbonat, Kaolin, calciniertes Kaolin, Kreide, Kyanit, gepulverter oder gemahlener Quarz, Glimmer, Phlogopit, Bariumsulfat, Feldspat, Wollastonit, Montmorillonit, Pseudoböhmit der Formel AlO(OH), Magnesiumcarbonat und Talkum, insbesondere Glasfasern, und
D) 3 bis 100 Massenanteile wenigstens eines Flammschutzadditivs, vorzugsweise auszuwählen aus mineralischen Flammschutzmitteln, stickstoffhaltigen Flammschutzmitteln oder phosphorhaltigen Flammschutzmitteln eingesetzt werden,
mit der Maßgabe eines Farbabstands ΔE <20 von den L*a*b* Koordinaten einer mit "2" beginnenden Farbnummer der RAL-Farbtabelle, bevorzugt ein ΔE <10, besonders bevorzugt ΔE <5, und einer Lasertransparenz von mindestens 10%, wobei kein Laserabsorber, insbesondere kein Laserabsorber gemäß der oben definierten Komponente E), eingesetzt wird. Vorzugsweise wird eine Lasertransparenz bei einer Wellenlänge von 980 nm von mindestens 20%, besonders bevorzugt im Bereich von 25 bis 90%, erzielt.

Erfindungsgemäß bevorzugt ist die Verwendung von 10,10'-Oxy-bis-12H-phthaloperin-12-on zur Herstellung von lasertransparenten, Polyamid basierten Erzeugnissen, wobei
A) auf 100 Massenanteile wenigstens eines Polyamids, vorzugsweise Polyamid 6 oder Polyamid 66, insbesondere Polyamid 6,
B) 0,01 bis 5 Massenanteile 10,10'-Oxy-bis-12H-phthaloperin-12-on,
C) 1 bis 150 Massenanteile wenigstens eines Füll- und Verstärkungsstoffs, vorzugsweise auszuwählen aus der Gruppe Glaskugeln oder Voll- oder Hohlglaskugeln, oder Glasfasern, oder gemahlenes Glas, amorphes Quarzglas, Aluminium-Borsilikatglas mit einem Alkaligehalt 1% (E-Glas), amorphe Kieselsäure, Quarzmehl, Calciumsilicat, Calciummetasilicat, Magnesiumcarbonat, Kaolin, calciniertes Kaolin, Kreide, Kyanit, gepulverter oder gemahlener Quarz, Glimmer, Phlogopit, Bariumsulfat, Feldspat, Wollastonit, Montmorillonit, Pseudoböhmit der Formel AlO(OH), Magnesiumcarbonat und Talkum, insbesondere Glasfasern, und
E) 0,01 bis 2 Massenanteile wenigstens eines Thermostabilisators, vorzugsweise auszuwählen aus der Gruppe der sterisch gehinderten Phenole, insbesondere solche enthaltend mindestens eine 2,6 Di-tert.-butylphenyl-Gruppe und/oder 2- tert.-butyl-6-methylphenyl-Gruppe, ferner der Phosphite, der Hypophosphite, insbesondere Natriumhypophosphit NaH₂PO₂, der Hydrochinone, der aromatischen sekundären Amine und der 3,3'-Thiodipropionsäureester eingesetzt werden,
mit der Maßgabe eines Farbabstands ΔE <20 von den L*a*b* Koordinaten einer mit "2" beginnenden Farbnummer der RAL-Farbtabelle, bevorzugt ein ΔE <10, besonders bevorzugt ΔE <5, und einer Lasertransparenz bei einer Wellenlänge von 980 nm von mindestens 10%, wobei kein Laserabsorber, insbesondere kein Laserabsorber gemäß der oben definierten Komponente E), eingesetzt wird.

Erfindungsgemäß bevorzugt ist die Verwendung von 10,10'-Oxy-bis-12H-phthaloperin-12-on zur Herstellung von lasertransparenten, Polyamid basierten Erzeugnissen, wobei
A) auf 100 Massenanteile wenigstens eines Polyamids, vorzugsweise Polyamid 6 oder Polyamid 66, insbesondere Polyamid 6,
B) 0,01 bis 5 Massenanteile 10,10'-Oxy-bis-12H-phthaloperin-12-on,
C) 1 bis 150 Massenanteile wenigstens eines Füll- und Verstärkungsstoffs, vorzugsweise auszuwählen aus der Gruppe Glaskugeln oder Voll- oder Hohlglaskugeln, oder Glasfasern, oder gemahlenes Glas, amorphes Quarzglas, Aluminium-Borsilikatglas mit einem Alkaligehalt 1% (E-Glas), amorphe Kieselsäure, Quarzmehl, Calciumsilicat, Calciummetasilicat, Magnesiumcarbonat, Kaolin, calciniertes Kaolin, Kreide, Kyanit, gepulverter oder gemahlener Quarz, Glimmer, Phlogopit, Bariumsulfat, Feldspat, Wollastonit, Montmorillonit, Pseudoböhmit der Formel AlO(OH), Magnesiumcarbonat und Talkum, insbesondere Glasfasern,
D) 3 bis 100 Massenanteile wenigstens eines Flammschutzadditivs, vorzugsweise auszuwählen aus mineralischen Flammschutzmitteln, stickstoffhaltigen Flammschutzmitteln oder phosphorhaltigen Flammschutzmitteln, und
E) 0,01 bis 2 Massenanteile wenigstens eines Thermostabilisators, vorzugsweise auszuwählen aus der Gruppe der sterisch gehinderten Phenole, insbesondere solche enthaltend mindestens eine 2,6 Di-tert.-butylphenyl-Gruppe und/oder 2- tert.-butyl-6-methylphenyl-Gruppe, ferner der Phosphite, der Hypophosphite, insbesondere Natriumhypophosphit NaH₂PO₂, der Hydrochinone, der aromatischen sekundären Amine und der 3,3'-Thiodipropionsäureester eingesetzt werden,
mit der Maßgabe eines Farbabstand ΔE <20 von den L*a*b* Koordinaten einer mit "2" beginnenden Farbnummer der RAL-Farbtabelle, bevorzugt ein ΔE <10, besonders bevorzugt ΔE <5, und einer Lasertransparenz bei einer Wellenlänge von 980 nm von mindestens 10%, wobei kein Laserabsorber, insbesondere kein Laserabsorber gemäß der oben definierten Komponente E), eingesetzt wird.

Vorzugsweise wird eine Lasertransparenz bei einer Wellenlänge von 980 nm von mindestens 20%, besonders bevorzugt im Bereich von 25 bis 90%, erzielt.

Bevorzugt erfolgt die Verwendung von 10,10'-Oxy-bis-12H-phthaloperin-12-on zur Markierung Polyamid basierter Erzeugnisse als Hochvoltkomponenten, insbesondere Hochvoltkomponenten für die Elektromobilität.

Zur Klarstellung sei angemerkt, dass vom Rahmen der vorliegenden Erfindung alle im Rahmen der Polymerzusammensetzungen oder Hochvoltkomponenten aufgeführten allgemeinen oder in Vorzugsbereichen genannten Definitionen und Parameter in beliebigen Kombinationen von den erfindungsgemäßen Verwendungen umfasst sind.

### Beispiele

Zum Nachweis der erfindungsgemäß beschriebenen Verbesserungen der Eigenschaften wurden zunächst durch Compoundierung entsprechende Polyamid basierte Polymerzusammensetzungen angefertigt. Die einzelnen Komponenten wurden hierzu in einem Zweiwellenextruder (ZSK 25 Compounder der Fa. Coperion Werner & Pfleiderer (Stuttgart, Deutschland)) bei Temperaturen zwischen 270 und 300°C gemischt, als Strang ausgetragen, bis zur Granulierbarkeit abgekühlt und granuliert. Nach dem Trocknen (in der Regel zwei Tage bei 80°C im Vakuumtrockenschrank) erfolgte die Verarbeitung des Granulats im Spritzguss bei Temperaturen im Bereich von 270 bis 290°C zu Normprüfkörpern für die jeweiligen Prüfungen.

Im Rahmen der vorliegenden Versuche galt als Maß für das **Ausbluten** (Bleeding) die Verfärbung einer Weich-PVC-Folie (W-PVC, FB110 weiß, normal kältefest der Fa. Jedi Kunststofftechnik GmbH, Eitorf, Deutschland) mit den Maßen 30•20•2 mm³, die zwischen 2 Kunststoffplatten mit den Maßen 60•40•2mm³ auf Basis der in Tabelle 2 beschriebenen Zusammensetzungen eingespannt, in einem Heißlufttrockenschrank bei 80°C für 12 Stunden gelagert wurde. Die Bewertung erfolgte danach visuell nach dem Graumaßstab gemäß ISO 105-A02, wobei '5' bedeutet, dass die PVC-Folie keine Farbänderung zeigte und '1' bedeutet, dass das PVC-Folie eine starke Farbveränderung zeigte.

Im Rahmen der vorliegenden Erfindung galt als Maß für die **Lichtechtheit** (Lightfastness) die Verfärbung der in Tabelle 2 beschriebenen Formmassen in Form von 60•40•2 mm³-Platten nach UV-Lagerung mit einem UV-Licht (Suntest CPS+, 300-800nm, 45-130 klx, mit Window Glass Filter 250-765 W/m² der Fa. Atlas Material Testing Technology GmbH, Linsengericht, Deutschland) für 96h. Die Bewertung der Verfärbung erfolgte visuell in Anlehnung an den Blaumaßstab (Blue Wool Scale) gemäß DIN EN ISO 105-B02, wobei '8' für eine hervorragende Lichtechtheit (geringe Farbänderung) und '1' für sehr geringe Lichtechtheit (starke Farbänderung) steht.

### Edukte:

| | |
|---|---|
| Komponente A) | Polyamid 6 (Durethan^{®} B26, Fa. Lanxess Deutschland GmbH, Köln, Deutschland) |
| Komponente B): | 10,10'-Oxy-bis-12H-phthaloperin-12-on [CAS Nr. 203576-97-0] von Angene International Limited, London |
| Komponente X/1): | 12H-Phthaloperin-12-on [CAS Nr. 6925-69-5] als Macrolex^{®} Orange 3G von der Firma Lanxess Deutschland GmbH, Köln |

**Tab. II**

| | | Bsp. 1 | Vgl. 1 |
|---|---|---|---|
| Komponente A) | Gew-teile | 100 | 100 |
| Komponente B) | Gew-teile | 0,3 | |
| Komponente X/1 | Gew-teile | | 0,3 |
| Bleeding | Graumaßstab | 5 | 4 |
| Lichtechtheit | Blaumaßstab | 7 | 6 |
| Lasertransparenz | [%] | 27 | n.b. |

Die Ergebnisse in **Tab. II** zeigen, dass das erfindungsgemäße Beispiel 1 Lasertransparenz bei gleichzeitig weniger Bleeding zeigte, als das gemäß dem Stand der Technik mit Komponente X/1 eingefärbte Material in Vgl. 1 und darüber hinaus auch eine phöhere Lichtechtheit aufwies. Die untersuchten Kunststoffplatten im erfinderischen Beispiel 1 wiesen einen RAL Farbwert von 2001 mit einem ΔE von <10 auf. n.b. steht für "nicht bestimmt" zum Zeitpunkt des Anmeldetags der vorliegenden Erfindung.

Die Lasertransparenz der im Rahmen der vorliegenden Anmeldung untersuchten Proben wurde in Übereinstimmung mit der DVS-Richtlinie 2243 (0112014) "Laserstrahlschweißen thermoplastischer Kunststoffe**"** anhand von Plättchen mit den Maßen 60 mm • 60 mm • 2 mm im nahen Infrarot (NIR) mit dem Transmissionsmessgerät LPKF TMG3 der Firma LPKF Laser & Electronics AG, Garbsen, Deutschland, das zuvor mit einem nach DIN EN ISO/IEC 17025 erzeugten Messnormal kalibriert wurde, bei einer Laserwellenlänge von 980 nm gemessen; siehe: LPKF AG 101016-DE: "Einfache Transmissionsmessung für Kunststoffe LPKF TMG3**".**

## Patentansprüche

1. Orange Polymerzusammensetzungen enthaltend wenigstens ein Polyamid und 10,10'-Oxy-bis-12H-phthaloperin-12-on, mit des Maßgabe, dass
A) auf 100 Massenanteile wenigstens eines Polyamids,
B) 0,01 bis 5 Massenanteile 10,10'-Oxy-bis-12H-phthaloperin-12-on eingesetzt werden,
und **dadurch gekennzeichnet, dass** die Polymerzusammensetzungen einen Farbabstand ΔE <20 zu den L*a*b* Koordinaten einer mit "2" beginnenden Farbnummer der RAL-Farbtabelle aufweisen.

2. Orange Hochvoltkomponenten basierend auf Polymerzusammensetzungen enthaltend wenigstens ein Polyamid und 10,10'-Oxy-bis-12H-phthaloperin-12-on, vorzugsweise mit der Maßgabe, dass
A) auf 100 Massenanteile wenigstens eines Polyamids,
B) 0,01 bis 5 Massenanteile 10,10'-Oxy-bis-12H-phthaloperin-12-on eingesetzt werden,
und mit der Maßgabe dass diese einen Farbabstand ΔE <20 zu den L*a*b* Koordinaten einer mit "2" beginnenden Farbnummer der RAL-Farbtabelle aufweisen.

3. Polymerzusammensetzungen gemäß Anspruch 1 oder Hochvoltkomponenten, gemäß Anspruch 2, **dadurch gekennzeichnet, dass**
A) auf 100 Massenanteile wenigstens eines Polyamids,
B) 0,01 bis 3 Massenanteile 10,10'-Oxy-bis-12H-phthaloperin-12-on eingesetzt werden, mit der Maßgabe, dass auf laserabsorbierende Additive verzichtet wird.

4. Polymerzusammensetzungen oder Hochvoltkomponentengemäß Anspruch 3, **dadurch gekennzeichnet, dass** zusätzlich zu den Komponenten A) und B noch C) wenigstens einen Füll und/oder Verstärkungsstoff, bevorzugt zu 1 bis 150 Massenanteilen, bezogen auf 100 Massenanteile der Komponente A) eingesetzt wird.

5. Polymerzusammensetzungen oder Hochvoltkomponentengemäß Anspruch 4, **dadurch gekennzeichnet, dass** zusätzlich zu den Komponenten A), B) und C) oder anstelle von C) noch D) wenigstens ein Flammschutzmittel, bevorzugt zu 3 bis 100 Massenanteilen, bezogen auf 100 Massenanteile der Komponente A) eingesetzt wird.

6. Polymerzusammensetzungen oder Hochvoltkomponenten gemäß Anspruch 4, **dadurch gekennzeichnet, dass** zusätzlich zu den Komponenten A), B), C) und D) oder anstelle von C) und/oder D) noch E) wenigstens ein weiteres von den Komponenten B), C) und D) verschiedenes Additiv, bevorzugt zu 0,01 bis 80 Massenanteile, bezogen auf 100 Massenanteile der Komponente A) eingesetzt wird.

7. Polymerzusammensetzungen oder Hochvoltkomponentengemäß gemäß einem oder mehrerer der Ansprüche 4 bis 6, **dadurch gekennzeichnet, dass** der Füll und/oder Verstärkungsstoff auszuwählen ist aus der Gruppe Glaskugeln oder Voll- oder Hohlglaskugeln, oder Glasfasern, gemahlenes Glas, amorphes Quarzglas, Aluminium-Borsilikatglas mit einem Alkaligehalt 1% (E-Glas), amorphe Kieselsäure, Quarzmehl, Calciumsilicat, Calciummetasilicat, Magnesiumcarbonat, Kaolin, calciniertes Kaolin, Kreide, Kyanit, gepulverter oder gemahlener Quarz, Glimmer, Phlogopit, Bariumsulfat, Feldspat, Wollastonit, Montmorillonit, Pseudoböhmit der Formel AIO(OH), Magnesiumcarbonat und Talkum, insbesondere Glasfasern.

8. Polymerzusammensetzungen oder Hochvoltkomponenten, insbesondere Hochvoltkomponenten für die Elektromobilität, gemäß einem oder mehrerer der Ansprüche 5 oder 6, **dadurch gekennzeichnet, dass** das Flammschutzmittel auszuwählen ist aus mineralischen Flammschutzmitteln, stickstoffhaltigen Flammschutzmitteln oder phosphorhaltigen Flammschutzmitteln.

9. Polymerzusammensetzungen oder Hochvoltkomponenten, insbesondere Hochvoltkomponenten für die Elektromobilität, gemäß Anspruch 6, **dadurch gekennzeichnet, dass** als Additiv E) wenigstens ein Thermostabilisator eingesetzt wird, vorzugsweise auszuwählen aus der Gruppe der sterisch gehinderten Phenole, insbesondere solche enthaltend mindestens eine 2,6 Ditert.-butylphenylgruppe und/oder 2-tert.-Butyl-6-methylphenyl-Gruppe, ferner der Phosphite, der Hypophosphite, insbesondere Natriumhypophosphit NaH₂PO₂, der Hydrochinone, der aromatischen sekundären Amine und der 3,3'-Thiodipropionsäureester.

10. Polymerzusammensetzungen oder Hochvoltkomponenten, insbesondere Hochvoltkomponenten für die Elektromobilität, gemäß einem oder mehrerer der Ansprüche 6 bis 9, **dadurch gekennzeichnet, dass**
A) auf 100 Massenanteile wenigstens eines Polyamids, vorzugsweise Polyamid 6 oder Polyamid 66, insbesondere Polyamid 6,
B) 0,01 bis 5 Massenanteile 10,10'-Oxy-bis-12H-phthaloperin-12-on,
C) 1 bis 150 Massenanteile wenigstens eines Füll- und Verstärkungsstoffs, vorzugsweise auszuwählen aus der Gruppe Glaskugeln oder Voll- oder Hohlglaskugeln, oder Glasfasern, oder gemahlenes Glas, amorphes Quarzglas, Aluminium-Borsilikatglas mit einem Alkaligehalt 1% (E-Glas), amorphe Kieselsäure, Quarzmehl, Calciumsilicat, Calciummetasilicat, Magnesiumcarbonat, Kaolin, calciniertes Kaolin, Kreide, Kyanit, gepulverter oder gemahlener Quarz, Glimmer, Phlogopit, Bariumsulfat, Feldspat, Wollastonit, Montmorillonit, Pseudoböhmit der Formel AlO(OH), Magnesiumcarbonat und Talkum, insbesondere Glasfasern, und
E) 0,01 bis 2 Massenanteile wenigstens eines Thermostabilisators, vorzugsweise auszuwählen aus der Gruppe der sterisch gehinderten Phenole, insbesondere solche enthaltend mindestens eine 2,6 Di-tert.-butylphenyl-Gruppe und/oder 2- tert.-butyl-6-methylphenyl-Gruppe, ferner der Phosphite, der Hypophosphite, insbesondere Natriumhypophosphit NaH₂PO₂, der Hydrochinone, der aromatischen sekundären Amine und der 3,3'-Thiodipropionsäureester eingesetzt werden.

11. Polymerzusammensetzungen oder Hochvoltkomponenten, insbesondere Hochvoltkomponenten für die Elektromobilität, gemäß einem oder mehrerer der Ansprüche 6 bis 9, **dadurch gekennzeichnet, dass**
A) auf 100 Massenanteile wenigstens eines Polyamids, vorzugsweise Polyamid 6 oder Polyamid 66, insbesondere Polyamid 6,
B) 0,01 bis 5 Massenanteile 10,10'-Oxy-bis-12H-phthaloperin-12-on,
C) 1 bis 150 Massenanteile wenigstens eines Füll- und Verstärkungsstoffs, vorzugsweise auszuwählen aus der Gruppe Glaskugeln oder Voll- oder Hohlglaskugeln, oder Glasfasern, oder gemahlenes Glas, amorphes Quarzglas, Aluminium-Borsilikatglas mit einem Alkaligehalt 1% (E-Glas), amorphe Kieselsäure, Quarzmehl, Calciumsilicat, Calciummetasilicat, Magnesiumcarbonat, Kaolin, calciniertes Kaolin, Kreide, Kyanit, gepulverter oder gemahlener Quarz, Glimmer, Phlogopit, Bariumsulfat, Feldspat, Wollastonit, Montmorillonit, Pseudoböhmit der Formel AlO(OH), Magnesiumcarbonat und Talkum, insbesondere Glasfasern,
D) 3 bis 100 Massenanteile wenigstens eines Flammschutzadditivs, vorzugsweise auszuwählen aus mineralischen Flammschutzmitteln, stickstoffhaltigen Flammschutzmitteln oder phosphorhaltigen Flammschutzmitteln, und
E) 0,01 bis 2 Massenanteile wenigstens eines Thermostabilisators, vorzugsweise auszuwählen aus der Gruppe der sterisch gehinderten Phenole, insbesondere solche enthaltend mindestens eine 2,6 Di-tert.-butylphenyl-Gruppe und/oder 2- tert.-butyl-6-methylphenyl-Gruppe, ferner der Phosphite, der Hypophosphite, insbesondere Natriumhypophosphit NaH₂PO₂, der Hydrochinone, der aromatischen sekundären Amine und der 3,3'-Thiodipropionsäureester eingesetzt werden.

12. Verwendung von 10,10'-Oxy-bis-12H-phthaloperin-12-on zur Herstellung von Polyamid basierten orange Erzeugnissen mit der Maßgabe, dass diese einen Farbabstand ΔE <20 von den L*a*b* Koordinaten einer mit "2" beginnenden Farbnummer der RAL-Farbtabelle aufweisen, bevorzugt ein ΔE <10, besonders bevorzugt ΔE <5 und eine Lasertransparenz bei einer Wellenlänge von 980 nm von mindestens 10% aufweisen, mit der Maßgabe, dass
A) auf 100 Massenanteile wenigstens eines Polyamids,
B) 0,01 bis 5 Massenanteile 10,10'-Oxy-bis-12H-phthaloperin-12-on eingesetzt werden,

13. Verfahren zur Herstellung lasertransparenter orangener Hochvoltkomponenten, insbesondere von Hochvoltkomponenten für die Elektromobilität, die einen Farbabstand ΔE <20 von den L*a*b* Koordinaten einer mit "2" beginnenden Farbnummer der RAL-Farbtabelle, bevorzugt ein ΔE <10, besonders bevorzugt ΔE <5, und eine Lasertransparenz bei einer Wellenlänge von 980 nm von mindestens 10% aufweisen, indem man A) wenigstens ein Polyamid und B) 10, 10'-Oxy-bis-12H-phthaloperin-12-on, vorzugsweise auf 100 Massenanteile wenigstens eines Polyamids 0,01 bis 5 Massenanteile 10,10'-Oxy-bis-12H-phthaloperin-12-on, miteinander zu Polymerzusammensetzungen mischt, zu Strängen austrägt, bis zur Granulierfähigkeit abkühlt, trocknet und granuliert und die Polymerzusammensetzungen anschließend im Spritzguss, einschließlich der Sonderverfahren Gasinjektionstechnik, Wasserinjektionstechnik und Projektilinjektionstechnik, in Extrusionsverfahren, einschließlich in der Profil-Extrusion, oder durch Blasformen, weiter verarbeitet wobei kein Laserabsorber eingesetzt wird.

14. Hochvoltkomponenten gemäß einem oder mehrerer der Ansprüche 2 bis 11, **dadurch gekennzeichnet, dass** es sich dabei um Abdeckungen für Elektrik oder Elektronik, Steuergeräte, Abdeckungen / Gehäuse für Sicherungen, Relais, Batteriezellenmodule, Sicherungshalter, Sicherungsstecker, Anschlussklemmen, Kabelhalterungen oder Ummantelungen, insbesondere Ummantelungen von Hochvoltstromschienen und Hochvoltstromverteilerschienen, handelt.

## Claims

1. Orange polymer compositions containing at least one polyamide and 10,10'-oxy-bis-12H-phthaloperin-12-one, with the proviso that
A) based on 100 parts by mass of at least one polyamide,
B) 0.01 to 5 parts by mass of 10,10'-oxy-bis-12H-phthaloperin-12-one are employed
and **characterized in that** the polymer compositions have a colour distance ΔE <20 to the L*a*b* coordinates of a colour number of the RAL colour chart beginning with "2".

2. Orange high-voltage components based on polymer compositions containing at least one polyamide and 10,10'-oxy-bis-12H-phthaloperin-12-one, preferably with the proviso that
A) based on 100 parts by mass of at least one polyamide,
B) 0.01 to 5 parts by mass of 10,10'-oxy-bis-12H-phthaloperin-12-one are employed
and with the proviso that these have a colour distance ΔE <20 to the L*a*b* coordinates of a colour number of the RAL colour chart beginning with "2".

3. Polymer compositions according to Claim 1 or high-voltage components according to Claim 2, **characterized in that**
A) based on 100 parts by mass of at least one polyamide,
B) 0.01 to 3 parts by mass of 10,10'-oxy-bis-12H-phthaloperin-12-one are employed, with the proviso that laser-absorbing additives are eschewed.

4. Polymer compositions or high-voltage components according to Claim 3, **characterized in that**, in addition to components A) and B, also C) at least one filler and/or reinforcer, preferably in an amount of 1 to 150 parts by mass based on 100 parts by mass of component A), is employed.

5. Polymer compositions or high-voltage components according to Claim 4, **characterized in that**, in addition to components A), B) and C) or instead of C), also D) at least one flame retardant, preferably in an amount of 3 to 100 parts by mass based on 100 parts by mass of component A), is employed.

6. Polymer compositions or high-voltage components according to Claim 4, **characterized in that**, in addition to components A), B), C) and D) or instead of C) and/or D), also E) at least one further additive distinct from components B), C) and D), preferably in an amount of 0.01 to 80 parts by mass based on 100 parts by mass of component A), is employed.

7. Polymer compositions or high-voltage components according to one or more of Claims 4 to 6, **characterized in that** the filler and/or reinforcer is to be selected from the group of glass spheres or solid or hollow glass spheres or glass fibres, ground glass, amorphous quartz glass, aluminium borosilicate glass having an alkali content of 1% (E-glass), amorphous silica, quartz flour, calcium silicate, calcium metasilicate, magnesium carbonate, kaolin, calcined kaolin, chalk, kyanite, powdered or ground quartz, mica, phlogopite, barium sulfate, feldspar, wollastonite, montmorillonite, pseudoboehmite of formula AlO(OH), magnesium carbonate and talc, especially glass fibres.

8. Polymer compositions or high-voltage components, especially high-voltage components for electromobility, according to one or more of Claims 5 or 6, **characterized in that** the flame retardant is to be selected from mineral flame retardants, nitrogen-containing flame retardants or phosphorous-containing flame retardants.

9. Polymer compositions or high-voltage components, especially high-voltage components for electromobility, according to Claim 6, **characterized in that** as additive E) at least one heat stabilizer, preferably to be selected from the group of sterically hindered phenols, especially those containing at least one 2,6-di-tert-butylphenyl group and/or 2-tert-butyl-6-methylphenyl group, phosphites, hypophosphites, especially sodium hypophosphite NaH₂PO₂, hydroquinones, aromatic secondary amines and 3,3'-thiodipropionic esters, is employed.

10. Polymer compositions or high-voltage components, especially high-voltage components for electromobility, according to one or more of Claims 6 to 9, **characterized in that**
A) based on 100 parts by mass of at least one polyamide, preferably polyamide 6 or polyamide 66, especially polyamide 6,
B) 0.01 to 5 parts by mass of 10,10'-oxy-bis-12H-phthaloperin-12-one,
C) 1 to 150 parts by mass of at least one filler and reinforcer, preferably to be selected from the group of glass spheres or solid or hollow glass spheres or glass fibres or ground glass, amorphous quartz glass, aluminium borosilicate glass having an alkali content of 1% (E-glass), amorphous silica, quartz flour, calcium silicate, calcium metasilicate, magnesium carbonate, kaolin, calcined kaolin, chalk, kyanite, powdered or ground quartz, mica, phlogopite, barium sulfate, feldspar, wollastonite, montmorillonite, pseudoboehmite of formula AlO(OH), magnesium carbonate and talc, especially glass fibres, and
E) 0.01 to 2 parts by mass of at least one heat stabilizer, preferably to be selected from the group of sterically hindered phenols, especially those containing at least one 2,6-di-tert-butylphenyl group and/or 2-tert-butyl-6-methylphenyl group, phosphites, hypophosphites, especially sodium hypophosphite NaH₂PO₂, hydroquinones, aromatic secondary amines and 3,3'-thiodipropionic esters, are employed.

11. Polymer compositions or high-voltage components, especially high-voltage components for electromobility, according to one or more of Claims 6 to 9, **characterized in that**
A) based on 100 parts by mass of at least one polyamide, preferably polyamide 6 or polyamide 66, especially polyamide 6,
B) 0.01 to 5 parts by mass of 10,10'-oxy-bis-12H-phthaloperin-12-one,
C) 1 to 150 parts by mass of at least one filler and reinforcer, preferably to be selected from the group of glass spheres or solid or hollow glass spheres or glass fibres or ground glass, amorphous quartz glass, aluminium borosilicate glass having an alkali content of 1% (E-glass), amorphous silica, quartz flour, calcium silicate, calcium metasilicate, magnesium carbonate, kaolin, calcined kaolin, chalk, kyanite, powdered or ground quartz, mica, phlogopite, barium sulfate, feldspar, wollastonite, montmorillonite, pseudoboehmite of formula AlO(OH), magnesium carbonate and talc, especially glass fibres,
D) 3 to 100 parts by mass of at least one flame retardant additive, preferably to be selected from mineral flame retardants, nitrogen-containing flame retardants or phosphorous-containing flame retardants, and
E) 0.01 to 2 parts by mass of at least one heat stabilizer, preferably to be selected from the group of sterically hindered phenols, especially those containing at least one 2,6-di-tert-butylphenyl group and/or 2-tert-butyl-6-methylphenyl group, phosphites, hypophosphites, especially sodium hypophosphite NaH₂PO₂, hydroquinones, aromatic secondary amines and 3,3'-thiodipropionic esters, are employed.

12. Use of 10,10'-oxy-bis-12H-phthaloperin-12-one for production of polyamide-based orange articles, with the proviso that these have a colour distance ΔE <20 to the L*a*b* coordinates of a colour number of the RAL colour chart beginning with "2", preferably ΔE <10, particularly preferably ΔE <5, and a laser transparency at a wavelength of 980 nm of at least 10%, with the proviso that
A) based on 100 parts by mass of at least one polyamide,
B) 0.01 to 5 parts by mass of 10,10'-oxy-bis-12H-phthaloperin-12-one are employed

13. Process for producing laser-transparent orange high-voltage components, especially high-voltage components for electromobility, which have a colour distance ΔE <20 to the L*a*b* coordinates of a colour number of the RAL colour chart beginning with "2", preferably ΔE <10, particularly preferably ΔE <5, and a laser transparency at a wavelength of 980 nm of at least 10%, comprising intermixing A) at least one polyamide and B) 10,10'-oxy-bis-12H-phthaloperin-12-one, preferably 0.01 to 5 parts by mass of 10,10'-oxy-bis-12H-phthaloperin-12-one based on 100 parts by mass of at least one polyamide, to afford polymer compositions, extruding, cooling to pelletizability, drying and pelletizing and subsequently processing the polymer compositions by injection moulding, including the specialty processes gas injection moulding, water injection moulding and projectile injection moulding, by extrusion processes, including by profile extrusion, or by blow moulding without the use of a laser absorber.

14. High-voltage components according to one or more of Claims 2 to 11, **characterized in that** they are covers for electrical or electronic parts, control units, covers/housings for fuses, relays, battery cell modules, fuse holders, fuse plugs, connection terminals, cable holders or sheathings, especially sheathings of high-voltage busbars and high-voltage distribution bars.

## Revendications

1. Compositions polymères orange contenant au moins un polyamide et de la 10,10'-oxy-bis-12H-phthalopérin-12-one, à condition que
A) pour 100 parties en masse d'au moins un polyamide,
B) 0,01 à 5 parties en masse de 10,10'-oxy-bis-12H-phthalopérin-12-one sont utilisées,
et **caractérisées en ce que** les compositions polymères présentent un écart de couleur ΔE < 20 par rapport aux coordonnées L*a*b* d'un numéro de couleur de la gamme de couleurs RAL commençant par « 2 ».

2. Composants haute tension orange à base de compositions polymères contenant au moins un polyamide et de la 10,10'-oxy-bis-12H-phthalopérin-12-one, de préférence à condition que
A) pour 100 parties en masse d'au moins un polyamide,
B) 0,01 à 5 parties en masse de 10,10'-oxy-bis-12H-phthalopérin-12-one sont utilisées,
et à condition que ceux-ci présentent un écart de couleur ΔE < 20 par rapport aux coordonnées L*a*b* d'un numéro de couleur de la gamme de couleurs RAL commençant par « 2 ».

3. Compositions polymères selon la revendication 1 ou composants haute tension selon la revendication 2, **caractérisés en ce que**
A) pour 100 parties en masse d'au moins un polyamide,
B) 0,01 à 3 parties en masse de 10,10'-oxy-bis-12H-phthalopérin-12-one sont utilisées, à condition qu'il soit renoncé aux additifs absorbant le laser.

4. Compositions polymères ou composants haute tension selon la revendication 3, **caractérisés en ce que**, en plus des composants A) et B), est encore utilisé C) au moins une charge et/ou un matériau de renforcement, de préférence en une quantité de 1 à 150 parties en masse, rapportée à 100 parties en masse du composant A).

5. Compositions polymères ou composants haute tension selon la revendication 4, **caractérisés en ce que**, en plus des composants A), B) et C), ou à la place de C), est encore utilisé D) au moins un agent ignifuge, de préférence en une quantité de 3 à 100 parties en masse, rapportée à 100 parties en masse du composant A).

6. Compositions polymères ou composants haute tension selon la revendication 4, **caractérisés en ce que**, en plus des composants A), B), C) et D), ou à la place de C) et/ou D), est encore utilisé E) au moins un autre additif différent des composants B), C) et D), de préférence en une quantité de 0,01 à 80 parties en masse, rapportée à 100 parties en masse du composant A).

7. Compositions polymères ou composants haute tension selon l'une quelconque des revendications 4 à 6, **caractérisés en ce que** la charge et/ou le matériau de renforcement est à sélectionner dans le groupe constitué par les billes de verre ou les billes de verre pleines ou creuses, ou les fibres de verre, le verre broyé, le verre de quartz amorphe, le verre alumino-borosilicaté présentant une teneur en alcalis de 1 % (verre E), la silice amorphe, la farine de quartz, le silicate de calcium, le métasilicate de calcium, le carbonate de magnésium, le kaolin, le kaolin calciné, la craie, le cyanite, le quartz pulvérisé ou broyé, le mica, le phlogopite, le sulfate de baryum, le feldspath, la wollastonite, la montmorillonite, la pseudoboehmite de formule AlO(OH), le carbonate de magnésium et le talc, en particulier les fibres de verre.

8. Compositions polymères ou composants haute tension, en particulier composants haute tension pour l'électromobilité, selon l'une quelconque des revendications 5 ou 6, **caractérisés en ce que** l'agent ignifuge est à sélectionner parmi les agents ignifuges minéraux, les agents ignifuges contenant de l'azote ou les agents ignifuges contenant du phosphore.

9. Compositions polymères ou composants haute tension, en particulier composants haute tension pour l'électromobilité, selon la revendication 6, **caractérisés en ce qu'**au moins un thermostabilisant est utilisé en tant qu'additif E), de préférence à sélectionner dans le groupe des phénols stériquement encombrés, en particulier ceux contenant au moins un groupe 2,6-di-tert.-butylphényle et/ou un groupe 2-tert.-butyl-6-méthylphényle, ainsi que des phosphites, des hypophosphites, en particulier l'hypophosphite de sodium NaH₂PO₂, des hydroquinones, des amines secondaires aromatiques et des esters de l'acide 3,3'-thiodipropionique.

10. Compositions polymères ou composants haute tension, en particulier composants haute tension pour l'électromobilité, selon l'une quelconque des revendications 6 à 9, **caractérisés en ce que**
A) pour 100 parties en masse d'au moins un polyamide, de préférence du polyamide 6 ou du polyamide 66, en particulier du polyamide 6,
B) 0,01 à 5 parties en masse de 10,10'-oxy-bis-12H-phthalopérin-12-one,
C) 1 à 150 parties en masse d'au moins une charge et d'un matériau de renforcement, de préférence à sélectionner dans le groupe constitué par les billes de verre ou les billes de verre pleines ou creuses, ou les fibres de verre, ou le verre broyé, le verre de quartz amorphe, le verre alumino-borosilicaté présentant une teneur en alcalis de 1 % (verre E), la silice amorphe, la farine de quartz, le silicate de calcium, le métasilicate de calcium, le carbonate de magnésium, le kaolin, le kaolin calciné, la craie, le cyanite, le quartz pulvérisé ou broyé, le mica, le phlogopite, le sulfate de baryum, le feldspath, la wollastonite, la montmorillonite, la pseudoboehmite de formule AlO(OH), le carbonate de magnésium et le talc, en particulier les fibres de verre, et
E) 0,01 à 2 parties en masse d'au moins un thermostabilisant, de préférence à sélectionner dans le groupe des phénols stériquement encombrés, en particulier ceux contenant au moins un groupe 2,6-di-tert.-butylphényle et/ou un groupe 2-tert.-butyl-6-méthylphényle, ainsi que des phosphites, des hypophosphites, en particulier l'hypophosphite de sodium NaH₂PO₂, des hydroquinones, des amines secondaires aromatiques et des esters de l'acide 3,3'-thiodipropionique, sont utilisés.

11. Compositions polymères ou composants haute tension, en particulier composants haute tension pour l'électromobilité, selon l'une quelconque des revendications 6 à 9, **caractérisés en ce que**
A) pour 100 parties en masse d'au moins un polyamide, de préférence du polyamide 6 ou du polyamide 66, en particulier du polyamide 6,
B) 0,01 à 5 parties en masse de 10,10'-oxy-bis-12H-phthalopérin-12-one,
C) 1 à 150 parties en masse d'au moins une charge et/ou un matériau de renforcement, de préférence à sélectionner dans le groupe constitué par les billes de verre ou les billes de verre pleines ou creuses, ou les fibres de verre, ou le verre broyé, le verre de quartz amorphe, le verre alumino-borosilicaté présentant une teneur en alcalis de 1 % (verre E), la silice amorphe, la farine de quartz, le silicate de calcium, le métasilicate de calcium, le carbonate de magnésium, le kaolin, le kaolin calciné, la craie, le cyanite, le quartz pulvérisé ou broyé, le mica, le phlogopite, le sulfate de baryum, le feldspath, la wollastonite, la montmorillonite, la pseudoboehmite de formule AlO(OH), le carbonate de magnésium et le talc, en particulier les fibres de verre,
D) 3 à 100 parties en masse d'au moins un additif ignifuge, de préférence à sélectionner parmi les agents ignifuges minéraux, les agents ignifuges contenant de l'azote ou les agents ignifuges contenant du phosphore, et
E) 0,01 à 2 parties en masse d'au moins un thermostabilisant, de préférence à sélectionner dans le groupe des phénols stériquement encombrés, en particulier ceux contenant au moins un groupe 2,6-di-tert.-butylphényle et/ou un groupe 2-tert.-butyl-6-méthylphényle, ainsi que des phosphites, des hypophosphites, en particulier l'hypophosphite de sodium NaH₂PO₂, des hydroquinones, des amines secondaires aromatiques et des esters de l'acide 3,3'-thiodipropionique, sont utilisés.

12. Utilisation de 10,10'-oxy-bis-12H-phthalopérin-12-one pour la fabrication de produits orange à base de polyamide, à condition que ceux-ci présentent un écart de couleur ΔE < 20 par rapport aux coordonnées L*a*b* d'un numéro de couleur de la gamme de couleurs RAL commençant par « 2 », de préférence un ΔE < 10, plus préférablement ΔE < 5, et présentent une transparence au laser à une longueur d'onde de 980 nm d'au moins 10 %, à condition que
A) pour 100 parties en masse d'au moins un polyamide,
B) 0,01 à 5 parties en masse de 10,10'-oxy-bis-12H-phthalopérin-12-one sont utilisées,

13. Procédé de fabrication de composants haute tension orange transparents au laser, en particulier de composants haute tension pour l'électromobilité, présentant un écart de couleur ΔE < 20 par rapport aux coordonnées L*a*b* d'un numéro de couleur de la gamme de couleurs RAL commençant par « 2 », de préférence un ΔE < 10, plus préférablement ΔE < 5, et une transparence au laser à une longueur d'onde de 980 nm d'au moins 10 %, consistant à mélanger A) au moins un polyamide et B) de la 10,10'-oxy-bis-12H-phthalopérin-12-one, de préférence 0,01 à 5 parties en masse de 10,10'-oxy-bis-12H-phthalopérin-12-one pour 100 parties en masse d'au moins un polyamide, pour former des compositions polymères, à les extruder sous forme de joncs, à les refroidir jusqu'à aptitude à la granulation, à les sécher et à les granuler, puis à transformer ensuite les compositions polymères par moulage par injection, y compris les procédés spéciaux de technique d'injection de gaz, de technique d'injection d'eau et de technique d'injection par projectile, par des procédés d'extrusion, y compris l'extrusion de profilés, ou par moulage par soufflage, aucun absorbeur laser n'étant utilisé.

14. Composants haute tension selon l'une quelconque des revendications 2 à 11, **caractérisés en ce qu'**il s'agit de couvercles pour systèmes électriques ou électroniques, d'unités de commande, de couvercles/boîtiers pour fusibles, de relais, de modules de cellules de batterie, de porte-fusibles, de connecteurs de fusibles, de bornes de raccordement, de supports de câbles ou de gaines, en particulier de gaines de barres omnibus haute tension et de barres omnibus de distribution haute tension.
